# EUROPÄISCHE PATENTSCHRIFT

(11) **EP 2 936 519 B1**
(45) Veröffentlichungstag und Bekanntmachung des Hinweises auf die Patenterteilung: **21.02.2018**
(21) Anmeldenummer: 13811485.5
(22) Anmeldetag: 18.12.2013
(51) Int. Cl.: H01F 38/14, H01M 2/10, H01M 10/46, H02J 7/00, H02J 7/02, H01M 10/6554

(54) **HANDWERKZEUGAKKU**
RECHARGEABLE HAND TOOL BATTERY
ACCUMULATEUR D'OUTIL PORTATIF

(30) Priorität: 21.12.2012 DE 102012112846; 01.02.2013 DE 102013201706; 17.12.2013 DE 102013226241
(43) Veröffentlichungstag der Anmeldung: 28.10.2015
(73) Patentinhaber: Robert Bosch GmbH, 70442 Stuttgart (DE)
(72) Erfinder: REJMAN, Marcin, 71332 Waiblingen (DE); AMANN, Volker, 86153 Augsburg (DE); LOHR, Guenter, 70771 Leinfelden-Echterdingen (DE); BREITENBACH, Jan, 70569 Stuttgart (DE); MACK, Juergen, 73035 Goeppingen (DE); KRUPEZEVIC, Dragan, 70565 Stuttgart (DE); DIETZEL, Friederike, 70469 Stuttgart (DE)
(86) Internationale Anmeldenummer: PCT/EP2013/077132
(87) Internationale Veröffentlichungsnummer: WO 2014/096029

(56) Entgegenhaltungen:
- JP-A- H06 311 660
- KR-A- 20120 008 632
- US-A- 3 675 108
- US-A1- 2006 164 032
- US-A1- 2009 237 194

## Beschreibung

### Stand der Technik

Es sind bereits unterschiedliche Handwerkzeugakkus mit mindestens einer ersten Akkuzelle und zumindest einer Induktivladeeinheit, die zumindest eine Induktivladespule zur Aufladung der mindestens einen Akkuzelle aufweist, vorgeschlagen worden. Aus der JP H06 311660 A und der US 3,675,108 A sind beispielsweise derartige Handwerkzeugakkus nach dem Oberbegriff des Anspruchs 1 bekannt.

### Offenbarung der Erfindung

Die Erfindung geht aus von einem Handwerkzeugakku mit mindestens drei Akkuzellen und zumindest einer Induktivladeeinheit, die zumindest eine Induktivladespule zur Aufladung der mindestens drei Akkuzellen aufweist. Die mindestens drei Akkuzellen weisen eine Haupterstreckungsrichtung auf, die zumindest im Wesentlichen senkrecht zu einer Spulenebene der Induktivladeeinheit ausgerichtet ist.

Es wird vorgeschlagen, dass der Durchmesser der Induktivladespule größer als ein Durchmesser der mindestens drei Akkuzellen in einer Richtung senkrecht zur Haupterstreckungsrichtung der mindestens drei Akkuzellen ist.

Unter einem "Handwerkzeugakku" soll insbesondere eine Vorrichtung mit mindestens einer Akkuzelleneinheit und Einheiten zu einer Auf- und Entladung der Energiespeichereinheit verstanden werden, die dazu vorgesehen ist, eine Handwerkzeugmaschine mit Strom zu versorgen. Bevorzugt ist der Handwerkzeugakku in einem Aufnahmeraum der Handwerkzeugmaschine aufgenommen oder an der Handwerkzeugmaschine lösbar befestigt. Alternativ ist auch vorstellbar, dass der Handwerkzeugakku von der Handwerkzeugmaschine getrennt ausgebildet und über eine Stromleitung, wie beispielsweise ein Kabel, elektrisch verbunden ist. Unter einer "Handwerkzeugmaschine" soll in diesem Zusammenhang insbesondere ein durch einen Benutzer handgeführtes Elektrogerät, wie insbesondere eine Bohrmaschine, ein Bohrhammer, eine Säge, ein Hobel, ein Schrauber, eine Fräse, ein Schleifer, ein Winkelschleifer und/oder ein Multifunktionswerkzeug oder ein Gartengerät, wie eine Hecken-, Strauch- und/oder Grasschere, verstanden werden. Alternativ kann der Handwerkzeugakku auch in einem anderen handgeführten Gerät eingesetzt werden, bespielsweise einem Messgerät. Unter einer "Akkuzelleneinheit" soll insbesondere eine wiederaufladbare Energiespeichereinheit mit zumindest drei Akkuzellen verstanden werden, die dazu vorgesehen sind, eine Energie zu einer Erzeugung eines elektrischen Stroms zu speichern und durch Einleitung eines Ladestroms aufzuladen. Insbesondere kann die Akkuzelleneinheit mindestens einen Akkuzellenblock aufweisen, in dem mehrere Akkuzellen in Reihe geschaltet sind. Auch kann die Akkuzelleneinheit mehrere Akkuzellenblöcke mit jeweils identischer Anzahl an Akkuzellen aufweisen, die dazu vorgesehen sind, nacheinander die Handwerkzeugmaschine mit Strom zu versorgen, so dass die Handwerkzeugmaschine über längere Zeit mit Strom versorgt wird, als dies mit einem einzelnen Akkuzellenblock möglich wäre. Unter einer "Akkuzelle" soll insbesondere eine Einheit verstanden werden, die zu einer elektrochemischen Speicherung elektrischer Energie mittels einer reversiblen Reaktion vorgesehen ist. Die Akkuzelle kann beispielsweise von einer Bleiakkuzelle, einer NiCd-Akkuzelle, einer NiMH-Akkuzelle, bevorzugt jedoch von einer lithiumbasierten Akkuzelle, gebildet sein. Die Akkuzelle kann von Akkuzellen unterschiedlicher Nennspannungen gebildet sein, beispielsweise Nennspannungen von 1,2 V, 1,5 V oder 3,6 V. Bevorzugt weisen die Akkuzellen eine Zylinderform auf. Der Handwerkzeugakku kann auch mehr als drei Akkuzellen aufweisen, die in Reihenschaltung geschaltet sind, um eine höhere Gesamtspannung des Handwerkzeugakkus zu erreichen. Beispielsweise kann der Handwerkzeugakku drei Akkuzellen mit einer Spannung von jeweils 3,6 V für eine Gesamtspannung des Handwerkzeugakkus von 10,8 V, oder mehr in Reihe geschaltete Akkuzellen mit einer Spannung von jeweils 3,6 V für eine höhere Gesamtspannung des Handwerkzeugakkus aufweisen. Auch kann der Handwerkzeugakku mindestens drei parallel geschaltete Akkuzellen und/oder Mischformen aus in Reihe und parallel geschalteten Akkuzellen aufweisen, welche dazu vorgesehen sind, nach einer Entladung einzelner erster Akkuzellen eine Handwerkzeugmaschine mit Strom zu versorgen, so dass eine Kapazität des Handwerkzeugakkus effektiv erhöht ist. Bei einer Reihenschaltung mehrerer Akkuzellen zur Erzeugung einer höheren Gesamtspannung können entsprechend mehrere weitere Akkuzellen zur Erhöhung der Kapazität parallel zueinander und in Reihe zu der Reihenschaltung geschaltet sein. Bei einer Reihenschaltung dreier Akkuzellen sind diese bevorzugt in einer Ebene senkrecht zu einer Haupterstreckung der drei Akkuzellen in einer Dreiecksform angeordnet. Unter einer "Induktivladeeinheit" soll insbesondere eine Einheit zur Aufladung der Akkuzelleneinheit verstanden werden, die einen Ladestrom über Induktion empfängt und die zumindest eine Induktivladespule und eine Ladeelektronik umfasst. Bevorzugt umfasst die Induktivladeeinheit zudem zumindest eine Spulenkerneinheit zu einer Erhöhung einer Induktivität der zumindest einen Induktivladespule. Vorteilhaft weist die Induktivladeeinheit einen Spulenträger auf, der die Induktivladespule relativ zu dem Spulenkern positioniert. Vorteilhaft ist die Induktivladeeinheit zudem dazu vorgesehen, zur Steuerung einer Aufladung und insbesondere zu einer Fremdobjekterkennung, mit einem Induktivladegerät der Induktivladevorrichtung zu kommunizieren Unter einer "Induktivladespule" soll in diesem Zusammenhang insbesondere eine Spule mit zumindest einer Wicklung aus einem elektrisch leitenden Material verstanden werden, die dazu vorgesehen ist, in zumindest einem Betriebszustand eine elektrische Energie, die durch eine Induktivspule eines Induktivladegeräts übertragen wird, zu empfangen und über eine Ladeelektronik einer Akkuzelle zuzuführen. Insbesondere ist die Induktivladespule dazu vorgesehen, ein elektromagnetisches Wechselfeld in einen elektrischen Wechselstrom umzuwandeln und/oder umgekehrt. Bevorzugt weist das Wechselfeld eine Frequenz von 10 - 500 kHz, besonders bevorzugt von 100 - 120 kHz, auf. Insbesondere ist die Richtung senkrecht zu der Spulenebene parallel zu einer Wicklungsachse der Induktivladespule ausgebildet. Unter einer "Ladeelektronik" soll insbesondere eine Elektronikeinheit verstanden werden, die dazu vorgesehen ist, eine Aufladung von Akkuzellen zu steuern und die insbesondere Elektronikelemente zu einer Spannungstransformation aufweist.

Unter einer "Haupterstreckungsrichtung" soll insbesondere eine Richtung parallel einer Symmetrieachse, entlang der die Akkuzelle eine maximale Erstreckung aufweist, verstanden werden. Unter einer "Spulenebene" soll insbesondere eine Ebene verstanden werden, in der Wicklungen der Induktionsladespule verlaufen. Insbesondere verläuft die Spulenebene senkrecht zu einer Wicklungsachse der Induktivladespule. Darunter, dass "die Haupterstreckungsrichtung der Akkuzelle zumindest im Wesentlichen senkrecht zu einer Spulenebene der Induktivladeeinheit ausgerichtet ist", soll insbesondere verstanden werden, dass ein Winkel zwischen der Spulenebene und der Haupterstreckungsrichtung maximal um dreißig Grad, vorteilhaft maximal um zwanzig Grad, bevorzugt maximal um zehn Grad und besonders bevorzugt maximal um fünf Grad von neunzig Grad abweicht. Insbesondere kann die Haupterstreckungsrichtung im rechten Winkel zu der Spulenebene verlaufen.

Durch die erfindungsgemäße Ausgestaltung kann insbesondere ein besonders kompakt ausgeführter Handwerkzeugakku mit einem möglichst geringen Querschnittsdurchmesser erreicht werden, der einen im Verhältnis zu einer Ausdehnung der Akkuzelle in einer zur Spulenebene parallelen Ebene größeren Durchmesser einer Induktivladespule aufweist, durch den eine schnelle Ladung des Akkus durch hohe Feldstärke ermöglicht ist.

In einer Weiterbildung der Erfindung wird vorgeschlagen, dass der Handwerkzeugakku mindestens eine weitere Akkuzelle mit einer Haupterstreckungsrichtung, die zumindest im Wesentlichen parallel zu der Spulenebene der Induktivladeeinheit ausgerichtet ist, aufweist. Die mindestens eine weitere Akkuzelle kann mit der mindestens einen ersten Akkuzelle in einer Reihenschaltung zusammengeschaltet sein, um eine höhere Gesamtspannung des Handwerkzeugakkus, als nur mit der ersten Akkuzelle alleine, zu erreichen oder kann parallel zu der mindestens einen ersten Akkuzelle geschaltet und dazu vorgesehen sein, nach Entladung der mindestens einen ersten Akkuzelle die Handwerkzeugmaschine mit Strom zu versorgen. Auch können mehrere erste Akkuzellen in Reihe zueinander geschaltet sein und mehrere weitere Akkuzellen in Reihe zueinander und parallel zu den mehreren ersten Akkuzellen geschaltet sein. Darunter, dass "die Haupterstreckungsrichtung der mindestens einen weiteren Akkuzelle zumindest im Wesentlichen parallel zu einer Spulenebene der Induktivladeeinheit ausgerichtet ist", soll insbesondere verstanden werden, dass ein Winkel zwischen der Spulenebene und der Haupterstreckungsrichtung maximal um dreißig Grad, vorteilhaft maximal um zwanzig Grad, bevorzugt maximal um zehn Grad und besonders bevorzugt maximal um fünf Grad von Null Grad abweicht. Insbesondere kann die Haupterstreckungsrichtung in einer zu der Spulenebene parallelen Ebene verlaufen. Es kann insbesondere ein Handwerkzeugakku erreicht werden, der eine Mehrzahl von Akkuzellen kompakt lagert.

Des Weiteren wird vorgeschlagen, dass die mindestens eine weitere Akkuzelle zwischen der mindestens einen ersten Akkuzelle und der Induktivladespule angeordnet ist. Darunter, dass "die mindestens eine weitere Akkuzelle zwischen der mindestens einen ersten Akkuzelle und der Induktivladeeinheit angeordnet ist" soll insbesondere verstanden werden, dass sämtliche Ebenen parallel zur Spulenebene, die durch die mindestens eine weitere Akkuzelle verlaufen, überschneidungsfrei zu der mindestens einen ersten Akkuzelle sind. Es kann insbesondere eine kompakte Gestaltung des Handwerkzeugakkus erreicht werden.

Weiterhin wird vorgeschlagen, dass ein Durchmesser der Induktivladespule größer als eine Haupterstreckungslänge der mindestens einen weiteren Akkuzelle ist. Unter einer "Haupterstreckungslänge" soll insbesondere eine Länge entlang der Haupterstreckungsrichtung verstanden werden. Es kann insbesondere ein kompakter Handwerkzeugakku mit einer geringen Ladezeit zur Aufladung der mindestens einen weiteren Akkuzelle erreicht werden.

Ferner wird vorgeschlagen, dass der Handwerkzeugakku ein Akkugehäuse mit einem Spulenaufnahmebereich zur Aufnahme der Induktivladespule aufweist, der zumindest teilweise ein Formschlusselement bildet. Unter einem "Akkugehäuse" soll insbesondere eine Baugruppe, die mindestens ein Gehäusebauteil umfasst, verstanden werden, das den Handwerkzeugakku zumindest teilweise mit äußeren Wandungen gegenüber einer Umgebung begrenzt und das insbesondere dazu vorgesehen ist, die Induktivladeeinheit und die Akkuzellen in einem an die Handwerkzeugmaschine montierten und/oder unmontierten Zustand gegenüber der Umgebung zu schützen und eine Beschädigung und/oder Verschmutzung zu vermeiden. Insbesondere definiert das Akkugehäuse eine Form und eine Größe des Handwerkzeugakkus. Vorzugsweise weist das Akkugehäuse Befestigungsvorrichtungen zu einer Befestigung des Handwerkzeugakkus an dem Handwerkzeug auf. Vorteilhaft weist das Akkugehäuse Kontaktaussparungen auf, durch die ein elektrischer Kontakt zwischen dem Handwerkzeug und der zumindest einen ersten Akkuzelle herstellbar ist. Insbesondere kann das Akkugehäuse vollständig oder lediglich teilweise geschlossen ausgebildet sein. Bei einer teilweise geschlossenen Ausbildung des Akkugehäuses kann ein von dem Akkugehäuse freier Bereich des Handwerkzeugakkus dazu vorgesehen sein, in einem Zustand, in dem der Handwerkzeugakku an einer Handwerkzeugmaschine montiert ist, innerhalb eines Gehäuses der Handwerkzeugmaschine angeordnet zu werden. Unter einem "Spulenaufnahmebereich" soll insbesondere ein Bereich des Akkugehäuses verstanden werden, der einen Raum zumindest teilweise umschließt, innerhalb dem die Induktivladespule der Induktivladeeinheit angeordnet ist. Bevorzugt weist der Spulenaufnahmebereich eine Ausdehnung auf, die in zumindest einer Richtung verschieden ist von Ausdehnungen von Akkugehäusebereichen, die Akkuzellen umschließen. Darunter, dass "der Spulenaufnahmebereich zumindest teilweise ein Formschlusselement bildet", soll insbesondere verstanden werden, dass der Spulenaufnahmebereich des Akkugehäuses an zumindest einer Seitenfläche, bevorzugt zumindest zwei Seitenflächen des Akkugehäuses, gegenüber weiteren Bereichen des Akkugehäuses vorsteht oder zurückgesetzt ist, so dass ein korrespondierendes Formschlusselement eines weiteren Geräts, beispielsweise eines Induktivladegeräts oder der Handwerkzeugmaschine, zur Herstellung einer Formschlussverbindung in eine von dem Spulenaufnahmebereich zumindest teilweise gebildeten Formschlussausnehmung eingreift oder einen von dem Spulenaufnahmebereich zumindest teilweise gebildete Formschlussvorsprung umschließt. Besonders bevorzugt ist der Spulenaufnahmebereich so ausgebildet, dass er an zumindest zwei Seitenflächen des Akkugehäuses gegenüber benachbarten Bereichen des Akkugehäuses an den Seitenflächen hervorsteht und einen Formschlussvorsprung ausbildet. Insbesondere ist das Formschlusselement dazu vorgesehen, während einer Ladephase eine Formschlussbefestigung an einem Induktivladegerät zu bewirken, um eine effiziente Energieübertragung zu erreichen. Insbesondere weist das Akkugehäuse einen Akkuzellenaufnahmebereich zur Aufnahme der mindestens einen Akkuzelle auf, der relativ zu dem Spulenaufnahmebereich zurücksteht. Unter einem "Akkuzellenaufnahmebereich" soll insbesondere ein Bereich des Akkugehäuses verstanden werden, der einen Raum zumindest teilweise umschließt, innerhalb dem die mindestens eine Akkuzelle und/oder die mindestens eine weitere Akkuzelle angeordnet ist. Darunter, dass "der Akkuzellenaufnahmebereich relativ zu dem Spulenaufnahmebereich zurücksteht" soll insbesondere verstanden werden, dass an zumindest einer Seitenfläche, bevorzugt an zumindest zwei Seitenflächen des Akkugehäuses, der Akkuzellenaufnahmebereich eine geringere Ausdehnung in eine Richtung einer Senkrechten auf der Seitenfläche aufweist als der Spulenaufnahmebereich. Es kann insbesondere ein kompakter Handwerkzeugakku zu einer einfachen Befestigung an einem Induktivladegerät oder einer Handwerkzeugmaschine unter Verzicht auf separate, externe Befestigungselemente erreicht werden. Es kann insbesondere eine vorteilhaft geringe Querausdehnung des Handwerkzeugakkus in von dem Spulenaufnahmebereich verschiedenen Bereichen und somit ein kompakter Handwerkzeugakku erreicht werden.

Weiterhin wird vorgeschlagen, dass die Induktivladeeinheit eine Spulenkerneinheit mit einem Plattenbereich aufweist, der die mindestens eine erste Akkuzelle zumindest teilweise gegen die Induktivladespule abschirmt. Unter einer "Spulenkerneinheit" soll in diesem Zusammenhang insbesondere eine zumindest teilweise von einem Magnetwerkstoff gebildete Einheit verstanden werden, die dazu vorgesehen ist, eine Induktivität einer Spule zu erhöhen. Unter einem "Magnetwerkstoff" soll in diesem Zusammenhang vorzugsweise ein ferrimagnetischer, insbesondere weichmagnetischer, Werkstoff verstanden werden, beispielsweise Ferrit. Alternativ ist es auch denkbar, ferromagnetische und/oder antiferromagnetische Werkstoffe zu verwenden. Unter einem "Plattenbereich" soll insbesondere ein flächiger Bereich der Spulenkerneinheit mit einer Dicke verstanden werden, die maximal halb so groß, bevorzugt maximal ein Viertel so groß und besonders bevorzugt maximal ein Achtel so groß ist wie eine minimale Ausdehnung der Spulenkerneinheit in eine Richtung senkrecht zu der Dicke. Unter einer "Dicke" der Spulenkerneinheit soll insbesondere eine Ausdehnung der Spulenkerneinheit in eine Richtung senkrecht zu der Spulenebene der Induktivladespule verstanden werden. Darunter, dass der Plattenbereich "die mindestens eine Akkuzelle zumindest teilweise gegen die Induktivladespule abschirmt", soll insbesondere verstanden werden, dass Feldlinien eines magnetischen Felds, das durch die Induktivladespule erzeugt wird, durch den Plattenbereich der Spulenkerneinheit zumindest teilweise von der mindestens einen Akkuzelle weggelenkt werden. Insbesondere wird somit eine Feldstärke des magnetischen Felds an einer Position der mindestens einen Akkuzelle um zumindest zehn Prozent, vorteilhaft um zumindest zwanzig Prozent, bevorzugt um zumindest vierzig Prozent und besonders bevorzugt um zumindest achtzig Prozent gegenüber einer ohne den Plattenbereich herrschenden Feldstärke geschwächt. Insbesondere erreicht der Plattenbereich die Abschirmung der mindestens einen Akkuzelle dadurch, dass bei einer Projektion der mindestens einen Akkuzelle auf die Induktionsspule zumindest sechzig Prozent, vorteilhaft zumindest achtzig Prozent und bevorzugt zumindest neunzig Prozent einer Fläche der Projektion durch den Plattenbereich verlaufen. Insbesondere kann die Spulenkerneinheit in dem Plattenbereich unterschiedliche Dicken aufweisen. Insbesondere kann der Plattenbereich der Spulenkerneinheit einen Teilbereich aufweisen, der eine größere Dicke aufweist als weitere Teilbereiche des Plattenbereichs und welcher sich bevorzugt bis in eine Spulenebene, und somit bis in einen in einer Ebene senkrecht zu der Dicke von Wicklungen der Induktivladespule umschlossenen Bereich, erstreckt. Bevorzugt ist der Teilbereich, der eine größere Dicke aufweist als weitere Teilbereiche des Plattenbereichs, nur an einer Seite des Plattenbereichs angeordnet. Insbesondere kann der Teilbereich des Plattenbereichs, der eine größere Dicke aufweist als weitere Teilbereiche des Plattenbereichs, eine Grundform aufweisen, die von einer Grundform des Plattenbereichs an einer von dem Teilbereich abgewandten Seite abweicht. Insbesondere kann der Plattenbereich eine im Wesentlichen rechteckige Grundform aufweisen und der Teilbereich eine daran auf einer Seite angefügte, im Wesentlichen kreisförmige Grundform aufweisen. Insbesondere kann durch die zumindest teilweise Abschirmung der mindestens einen Akkuzelle eine Belastung der Akkuzellen durch das Magnetfeld der Induktivladespule zumindest verringert und einer Beschädigung des Handwerkzeugakkus vorgebeugt werden.

In einer Weiterbildung der Erfindung wird vorgeschlagen, dass der Plattenbereich zumindest im Wesentlichen rechteckig ausgebildet ist. Unter "zumindest im Wesentlichen rechteckig ausgebildet" soll insbesondere verstanden werden, dass der Plattenbereich eine Fläche aufweist, die von vier zumindest im Wesentlichen gerade ausgebildeten Seiten begrenzt ist. Unter "zumindest im Wesentlichen gerade ausgebildeten Seiten" sollen insbesondere Seiten verstanden werden, die zumindest einen als Gerade ausgebildeten Seitenbereich, dessen Länge zumindest fünfzig Prozent einer Gesamtlänge der Seite entspricht, aufweisen. Insbesondere können die zumindest im Wesentlichen gerade ausgebildeten Seiten eine Rechteckform, insbesondere eine Rechteckform mit abgerundeten Kanten, begrenzen. Insbesondere kann der Plattenbereich eine Fläche mit einer Grundform eines Rechtecks mit abgerundeten Seiten aufweisen, wobei bevorzugt der kreisförmige Teilbereich einer Fläche des Plattenbereichs eine höhere Dicke aufweist als weitere Teilbereiche des Plattenbereichs und sich bis in einen Innenbereich der Induktivladespule, der von Windungen der Induktivladespule umschlossen ist, erstreckt. Insbesondere weist der Plattenbereich zumindest eine Achsenlänge auf, die kleiner ist als ein Durchmesser der Induktivladespule. Unter einer "Achsenlänge" soll insbesondere eine Erstreckungslänge parallel zu einer zumindest im Wesentlichen geraden Seite des Plattenbereichs, eine Länge einer Hauptachse oder Nebenachse eines ellipsenförmigen Plattenbereichs oder ein Durchmesser eines kreisförmigen Plattenbereichs verstanden werden. Bevorzugt ist zumindest eine weitere Achsenlänge des Plattenbereichs größer als ein Durchmesser der Induktivladespule. Bevorzugt ist der Plattenbereich als Rechteckform mit abgerundeten Ecken ausgebildet, die eine Achsenlänge, die kleiner ist als der Durchmesser der Induktivladespule und die parallel zu der Haupterstreckungsrichtung der mindestens einen Akkuzelle verläuft, und eine dazu senkrechte Achsenlänge, die größer ist als der Durchmesser der Induktivladespule, aufweist. Bevorzugt weist die Spulenkerneinheit mehrere getrennte Kernstücke auf. Darunter, dass "die Spulenkerneinheit mehrere getrennte Kernstücke" aufweist, soll in diesem Zusammenhang insbesondere verstanden werden, dass die Spulenkerneinheit mindestens zwei und bevorzugt mindestens vier voneinander getrennt ausgebildete und getrennt angeordnete Stücke aufweist, die zumindest teilweise von einem Magnetwerkstoff gebildet sind. Insbesondere sind die mehreren getrennten Kernstücke symmetrisch zueinander angeordnet. Insbesondere weist die Spulenkerneinheit, die mehrere getrennte Kernstücke aufweist, eine höhere mechanische Stabilität bei im Wesentlichen gleichen magnetischen Eigenschaften auf wie eine einstückige Ausführung einer Spulenkerneinheit. Es kann insbesondere eine Spulenkerneinheit mit einer einfach ausgebildeten Grundform erreicht werden.

Des Weiteren wird vorgeschlagen, dass der Handwerkzeugakku zumindest ein Wärmeverteilungselement aufweist, das dazu vorgesehen ist, eine Abwärme zu verteilen. Unter einem "Wärmeverteilungselement" soll insbesondere ein Element verstanden werden, dass dazu vorgesehen ist, eine lokal in einem begrenzten Bereich entstehende Wärme mittels Wärmeleitung, Wärmestrahlung oder Konvektion von dem begrenzten Bereich zumindest teilweise abzuleiten und über einen größeren Bereich zu verteilen. Insbesondere weist das Wärmeverteilungselement eine Wärmeleitfähigkeit auf, welche zumindest doppelt so groß, vorteilhaft zumindest viermal so groß und bevorzugt zumindest zehnmal so groß ist wie eine Wärmeleitfähigkeit von Elementen, welche das Wärmetransportelement umgeben. Darunter, dass "das Wärmeverteilungselement dazu vorgesehen ist, eine Abwärme zu verteilen" soll insbesondere verstanden werden, dass das Wärmeverteilungselement eine Fläche aufweist, die zumindest doppelt so groß, vorteilhaft zumindest viermal so groß und bevorzugt zumindest zehnmal so groß ist wie eine Fläche des begrenzten Bereichs und die dazu vorgesehen ist, die von dem begrenzten Bereich weggeleitete Wärme abzugeben. Unter einer "Abwärme" soll insbesondere eine als Nebenprodukt bei einer Aufladung und/oder Entladung der mindestens einen Akkuzelle entstehende Wärme verstanden werden. Bevorzugt ist das Wärmeverteilungselement thermisch leitend mit der Ladeelektronik sowie mit der mindestens einen Akkuzelle verbunden. Bevorzugt weist das Wärmeverteilungselement zumindest eine Wärmeleitbeschichtung auf. Unter einer "Wärmeleitbeschichtung" soll insbesondere eine Beschichtung aus einem Material, dass eine Wärmeleitfähigkeit aufweist, die zumindest doppelt so groß, vorteilhaft zumindest viermal so groß und bevorzugt zumindest zehnmal so groß ist wie eine Wärmeleitfähigkeit eines Materials, auf dem die Wärmeleitbeschichtung aufgebracht ist, verstanden werden. Unter einer "Beschichtung" soll insbesondere eine auf zumindest einer Fläche eines Trägerelements aufgebrachte Schicht verstanden werden, die eine Dicke aufweist, die maximal ein Fünftel, vorteilhaft maximal ein Zehntel und bevorzugt maximal ein Zwanzigstel einer Dicke des Trägerelements beträgt. Bevorzugt weist die Wärmeleitbeschichtung eine Dicke auf, die maximal im Millimeterbereich liegt. Bevorzugt ist die Wärmeleitbeschichtung zumindest teilweise aus Aluminium hergestellt und auf einem als Bügel ausgebildeten Trägerelement aufgebracht. Besonders bevorzugt ist der Bügel dazu vorgesehen, die Ladeelektronik von der zumindest einen Akkuzelle zu beabstanden. Es kann insbesondere eine Beschädigung des Handwerkzeugakkus durch lokal erhöhte Temperaturen sowie eine Beeinträchtigung eines Ladevorgangs oder eines Entladevorgangs der zumindest einen Akkuzelle durch lokal unterschiedliche Temperaturen vermieden werden.

Ferner wird vorgeschlagen, dass zumindest die Induktivladeeinheit als ein vormontiertes Modul ausgebildet ist. Unter einem "vormontierten Modul" soll insbesondere verstanden werden, dass die Induktivladeeinheit, die zumindest die Induktivladespule, einen Spulenträger, auf den die Induktivladespule aufgebracht ist, und die Ladeelektronik umfasst, bei einer Herstellung des Handwerkzeugakkus in einem Schritt zusammenmontiert und als vollständiges Modul in weiteren Schritten mit weiteren Bauteilen des Handwerkzeugakkus verbaut wird und dass die Induktivladeeinheit im Ganzen aus dem Handwerkzeug entnehmbar und separat auf eine Funktionsfähigkeit testbar und/oder in einen anderen Handwerkzeugakku einbaubar ist. Bevorzugt umfasst das vormontierte Modul zusätzlich zu der Induktivladeeinheit zumindest ein Akkugehäusebauteil, das den Spulenträger aufnimmt und ein als Bügel ausgebildetes Wärmeverteilungselement, welches nach Montage die einzelnen Teilelemente des vormontierten Moduls zusammenhält. Es kann insbesondere eine vereinfachte Montage des Handwerkzeugakkus erreicht und eine Induktivladeeinheit, welche für einen Einsatz in mehreren verschiedenen Handwerkzeugakkus entnehmbar ist, zur Verfügung gestellt werden.

Des Weiteren wird ein System aus einer Handwerkzeugmaschine und einem erfindungsgemäßen Handwerkzeugakku vorgeschlagen.

In einer Weiterbildung der Erfindung wird vorgeschlagen, dass die Handwerkzeugmaschine und der Handwerkzeugakku werkzeuglos voneinander trennbar sind. Unter "werkzeuglos voneinander trennbar" soll insbesondere verstanden werden, dass der Handwerkzeugakku nach Befestigung an einer Handwerkzeugmaschine von einem Benutzer von der Handwerkzeugmaschine beschädigungsfrei abgenommen werden kann. Insbesondere können der Handwerkzeugakku und/oder die Handwerkzeugmaschine Befestigungsmittel zur Befestigung des Handwerkzeugakkus an der Handwerkzeugmaschine aufweisen, welche durch den Benutzer zu einer Trennung des Handwerkzeugakkus von der Handwerkzeugmaschine gelöst werden können. Bevorzugt ist der Handwerkzeugakku in die Handwerkzeugmaschine einsteckbar oder einschiebbar ausgebildet und kann durch Ziehen von der Handwerkzeugmaschine getrennt werden. Es kann insbesondere ein System mit einer einfachen Austauschbarkeit des Handwerkzeugakkus erreicht werden.

Weiterhin wird vorgeschlagen, dass die mindestens eine erste Akkuzelle in einem montierten Zustand der Handwerkzeugmaschine und des Handwerkzeugakkus zumindest im Wesentlichen von einem Handgriffgehäuse umgeben ist. Unter "zumindest im Wesentlichen von einem Handgriffgehäuse umgeben" soll insbesondere verstanden werden, dass die mindestens eine erste Akkuzelle auf zumindest fünfzig Prozent einer Länge entlang der Haupterstreckungsrichtung auf einer Ebene senkrecht zu der Haupterstreckungsrichtung entlang eines Winkelbereichs von zumindest einhundertachtzig Grad, bevorzugt zumindest zweihundertsiebzig Grad und besonders bevorzugt von dreihundertsechzig Grad von dem Handgriffgehäuse umschlossen ist. Bevorzugt ist die zumindest eine Induktivladespule in dem montierten Zustand zumindest im Wesentlichen außerhalb des Handgriffgehäuses angeordnet. Unter "zumindest im Wesentlichen außerhalb des Handgriffgehäuses angeordnet" soll insbesondere verstanden werden, dass zumindest fünfzig Prozent, vorteilhaft zumindest siebzig Prozent eines Volumens außerhalb des Handgriffgehäuses angeordnet sind. Es kann insbesondere ein kompaktes System aus Handwerkzeugmaschine und Handwerkzeugakku mit vorteilhaften Führungseigenschaften erreicht werden.

Ferner wird vorgeschlagen, dass das System eine Montagerichtung für die Montage des Handwerkzeugakkus an die Handwerkzeugmaschine aufweist, die zumindest im Wesentlichen senkrecht zu einer Spulenebene der Induktivladeeinheit verläuft. Es kann insbesondere eine einfach durchführbare Montage erreicht werden.

Des Weiteren wird ein System mit einer Induktivladevorrichtung und einem erfindungsgemäßen Handwerkzeugakku vorgeschlagen.

In einer Weiterbildung der Erfindung wird vorgeschlagen, dass die Induktivladevorrichtung Formschlusselemente zu einer Befestigung des Handwerkzeugakkus während einer Ladephase aufweist. Unter "Formschlusselementen" sollen insbesondere Elemente verstanden werden, die dazu vorgesehen sind, mit korrespondierenden Formschlusselementen des Handwerkzeugakkus zu einer formschlüssigen Befestigung des Handwerkzeugakkus während der Ladephase zusammenzuwirken. Insbesondere sind die Induktivladevorrichtung und der Handwerkzeugakku werkzeuglos voneinander trennbar. Unter einer "Ladephase" soll insbesondere ein Zeitraum verstanden werden, während dem die mindestens eine Akkuzelle über eine von der Induktivladevorrichtung gesendete und von der Induktivladeeinheit des Handwerkzeugakkus empfangene elektrische Energie aufgeladen wird. Beispielsweise kann die Induktivladevorrichtung als Ausnehmungen ausgebildete Formschlusselemente zu einer Aufnahme eines Spulenaufnahmebereichs des Akkugehäuses, der gegenüber einem Akkuaufnahmebereich hervorsteht, aufweisen. Es kann insbesondere eine Unterbrechung der Ladephase oder eine Verringerung einer Übertragungseffizienz durch relative Verschiebungen der Induktivladevorrichtung und des Handwerkzeugakkus zueinander vermieden werden.
Ferner wird vorgeschlagen, dass die Induktivladevorrichtung und der Handwerkzeugakku einen Positionierungsvorsprung und eine Positionierungsausnehmung mit voneinander abweichenden Grundformen aufweisen. Unter einem "Positionierungsvorsprung" soll insbesondere ein Oberflächenbereich, welcher gegenüber benachbarten Oberflächenbereichen hervorragt und das zu einem Eingriff in die Positionierungsausnehmung vorgesehen ist, verstanden werden. Unter einer "Positionierungsausnehmung" soll insbesondere ein Oberflächenbereich, welcher gegenüber benachbarten Oberflächenbereichen zurückgesetzt ist und der zu einem Eingriff in die Positionierungsvorsprung vorgesehen ist, verstanden werden. Insbesondere sind der Positionierungsvorsprung und die Positionierungsausnehmung mit voneinander abweichenden, aber zueinander korrespondierenden Grundformen ausgebildet, beispielsweise kann der Positionierungsvorsprung eine Kreisform mit einem Durchmesser aufweisen, der einer Seitenlänge einer quadratischen Positionierungsausnehmung entspricht. Bevorzugt weist der Positionierungsvorsprung zumindest in einem Bereich, vorzugsweise einem Endbereich einer Seite eine geringere Querausdehnung auf als eine Querausdehnung der Positionierungsausnehmung, so dass ein Einschieben erleichtert wird. Es kann insbesondere eine einfache Einführung des Positionierungsvorsprungs in die Positionierungsausnehmung erreicht werden.
Weiterhin wird eine erfindungsgemäße Induktivladeeinheit eines Handwerkzeugakkus vorgeschlagen.

Der erfindungsgemäße Handwerkzeugakku ist durch den Gegenstand des unabhängigen Anspruchs 1 definiert.

### Zeichnung

Weitere Vorteile ergeben sich aus der folgenden Zeichnungsbeschreibung. In der Zeichnung sind vier Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen erfindungsgemäßen Handwerkzeugakku in einer teiloffenen Ansicht mit abgenommenem Gehäusedeckel, der drei erste Akkuzellen, die eine Haupterstreckungsrichtung aufweisen, welche senkrecht zu einer Spulenebene einer Induktivladeeinheit verläuft, und drei weitere Akkuzellen umfasst,
- Fig. 2: eine Außenansicht des in Fig. 1 dargestellten Handwerkzeugakkus
- Fig. 3: ein System aus einer Handwerkzeugmaschine und dem erfindungsgemäßen Handwerkzeugakku in einem unmontierten Zustand,
- Fig. 4: das System aus Handwerkzeugmaschine und Handwerkzeugakku in einem montierten Zustand,
- Fig. 5: eine Teildarstellung des erfindungsgemäßen Handwerkzeugakkus mit Sicht von oben auf die weiteren Akkuzellen und auf eine Induktivladespule der Induktivladeeinheit,
- Fig. 6: einen seitlichen Schnitt durch Fig. 4,
- Fig. 7: eine Darstellung von Bauteilen der Induktivladeeinheit als vormontiertes Modul,
- Fig. 8: eine Ansicht auf die Induktivladespule und eine Spulenkerneinheit, welche eine Abschirmung durch die Spulenkerneinheit zeigt,
- Fig. 9: eine Ansicht von oben auf die Spulenkerneinheit und die Induktivladespule,
- Fig. 10: eine Ansicht auf einen Positionierungsvorsprung des erfindungsgemäßen Handwerkzeugakkus,
- Fig. 11: ein System aus dem erfindungsgemäßen Handwerkzeugakku und einer Induktivladevorrichtung mit einer Positionierungsausnehmung,
- Fig. 12: eine schematische Darstellung von unterschiedlichen Grundformen von Positionierungsvorsprung und Positionierungsausnehmung,
- Fig. 13: eine alternative Ausführung unterschiedlicher Grundformen von Positionierungsvorsprung und Positionierungsausnehmung,
- Fig. 14: ein alternatives Ausführungsbeispiel eines erfindungsgemäßen Handwerkzeugakkus mit einer einzelnen ersten Akkuzelle,
- Fig. 15: ein weiteres alternatives Ausführungsbeispiel eines erfindungsgemäßen Handwerkzeugakkus mit drei ersten Akkuzellen, die eine Haupterstreckungsrichtung aufweisen, welche senkrecht zu einer Spulenebene einer Induktivladeeinheit verläuft, und mit drei weiteren Akkuzellen,
- Fig. 16: eine alternative Ausführung einer Induktivladevorrichtung und
- Fig. 17: ein System aus mit der alternativ ausgeführten Induktivladevorrichtung und einem erfindungsgemäßen Handwerkzeugakku.

### Beschreibung der Ausführungsbeispiele

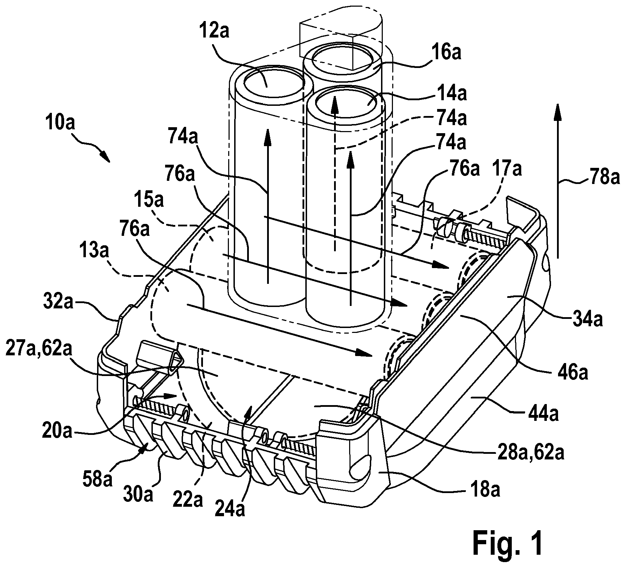

Fig. 1 zeigt einen erfindungsgemäßen Handwerkzeugakku 10a mit drei ersten Akkuzellen 12a, 14a, 16a und einer Induktivladeeinheit 20a, die eine Induktivladespule 22a zur Aufladung der ersten Akkuzellen 12a, 14a, 16a aufweist, bei dem die ersten Akkuzellen 12a, 14a, 16a eine Haupterstreckungsrichtung 74a aufweisen, die senkrecht zu einer Spulenebene der Induktivladeeinheit 20a ausgerichtet ist. Die Spulenebene der Induktivladeeinheit 20a entspricht einer Spulenebene der Induktivladespule 22a, in der Wicklungen der Induktivladespule 22a verlaufen und die senkrecht auf einer Wicklungsachse der Induktivladespule 22a steht. Der Handwerkzeugakku 10a umfasst zudem drei weitere Akkuzellen 13a, 15a, 17a mit einer Haupterstreckungsrichtung 76a, die parallel zu der Spulenebene der Induktivladeeinheit 20a ausgerichtet ist. Die weiteren Akkuzellen 13a, 15a, 17a sind zwischen den ersten Akkuzellen 12a, 14a, 16a und der Induktivladespule 22a angeordnet. Die ersten Akkuzellen 12a, 14a, 16a und die weiteren Akkuzellen 13a, 15a, 17a sind von Lithium-Ionen-Akkus mit einer Nennspannung von 3,6 V gebildet. Grundsätzlich können als Akkuzellen 12a, 13a, 14a, 15a, 16a, 17a auch Akkus mit anderen Elektrolyten, beispielsweise Nickel-Metallhydrid-Akkus, Nickel-Cadmium-Akkus oder Nickel-Zink-Akkus, und/oder mit anderen Nennspannungen eingesetzt werden. Die ersten Akkuzellen 12a, 14a, 16a sind in einer Reihenschaltung zu einem ersten Zellenblock mit einer Gesamtspannung von 10,8 V zusammengeschaltet und die weiteren Akkuzellen 13a, 15a, 17a in einer Reihenschaltung zu einem zweiten Zellenblock mit einer Gesamtspannung von 10,8 V zusammengeschaltet. Der erste Zellenblock ist dabei dazu vorgesehen, als erstes eine Handwerkzeugmaschine 36a mit Strom zu versorgen und der zweite Zellenblock dazu, nach einer Entladung des ersten Zellenblocks die Handwerkzeugmaschine 36a mit Strom zu versorgen, so dass der Handwerkzeugakku 10a insgesamt eine doppelt so hohe Kapazität aufweist, wie bei einer Verwendung eines einzelnen Zellenblocks aus jeweils drei ersten Akkuzellen 12a, 14a, 16a oder weiteren Akkuzellen 13a, 15a, 17a. Grundsätzlich können in einem Zellenblock sowohl Zellen der ersten Akkuzellen 12a, 14a, 16a als auch der weiteren Akkuzellen 13a, 15a, 17a zusammen in Reihe geschaltet sein. Auch können alle Akkuzellen 12a, 13a, 14a, 15a, 16a, 17a in einem gemeinsamen Zellenblock zusammengeschaltet sein. In einer einfachen Ausführungsform des Handwerkzeugakkus 10a umfasst der Handwerkzeugakku 10a lediglich einen einzelnen Zellenblock mit den drei ersten Akkuzellen 12a, 14a, 16a, die in einem montierten Zustand zumindest teilweise in einem Handgriff 38a einer Handwerkzeugmaschine 36a aufgenommen sind. Diese Ausführungsform ist in Fig. 1 dadurch angedeutet, dass der zweite Zellenblock aus den weiteren Akkuzellen 13a, 15a, 17a, welcher in dieser Ausführungsform nicht enthalten ist, gestrichelt dargestellt ist. In einer alternativen Ausführungsform umfasst der Handwerkzeugakku 10a lediglich eine einzige der Akkuzellen 12a, 14a, 16a. In einer weiteren alternativen Ausführungsform umfasst der Handwerkzeugakku 10a lediglich zwei der Akkuzellen 12a, 14a, 16a. In allen drei genannten Ausführungsformen, in denen der Handwerkzeugakku 10a eine, zwei oder drei der Akkuzellen 12a, 14a, 16a aufweist, ist eine Induktivladespule 22a zur Aufladung der wenigstens einen der Akkuzellen 12a, 14a, 16a vorgesehen. Dabei weist die wenigstens eine der Akkuzellen 12a, 14a, 16a eine Haupterstreckungsrichtung 74a auf, die senkrecht zu einer Spulenebene der Induktivladeeinheit 20a ausgerichtet ist.

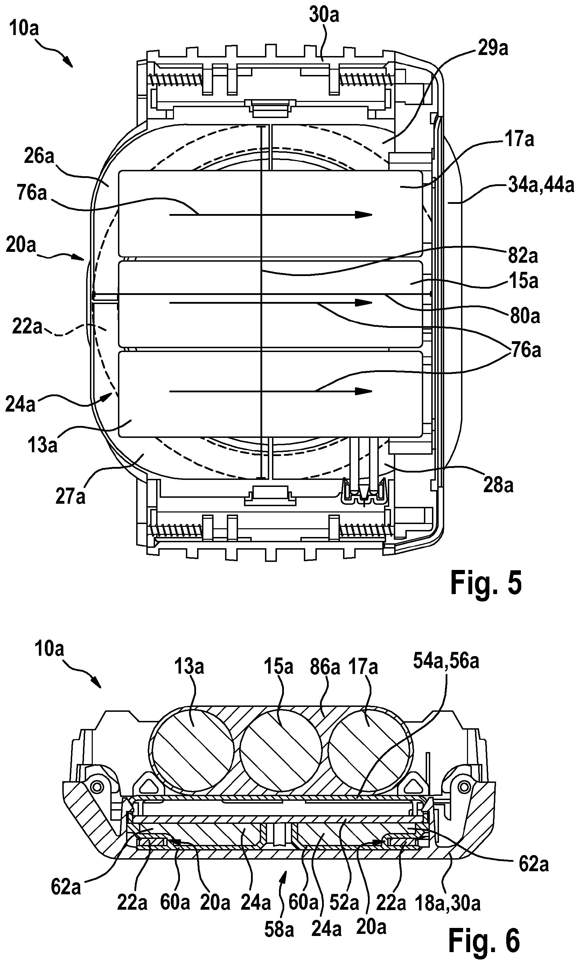

Die Induktivladeeinheit 20a weist eine Spulenkerneinheit 24a mit einem Plattenbereich 62a auf, der die ersten Akkuzellen 12a, 14a, 16a und die weiteren Akkuzellen 13a, 15a, 17a gegen die Induktivladespule 22a abschirmt. Die Akkuzellen 12a, 13a, 14a, 15a, 16a, 17a sind in Aufnahmeräumen von Akkuzellenträgern 86a aus einem Kunststoff angeordnet. Die Akkuzellenträger 86a sind in Fig. 1 zur besseren Darstellung der Anordnungen der Akkuzellen 12a, 13a, 14a, 15a, 16a, 17a innerhalb des Handwerkzeugakkus 10a nicht dargestellt. Die Akkuzellenträger 86a sind in einer Richtung parallel zu Haupterstreckungsrichtungen 74a, 76a der Akkuzellen 12a, 13a, 14a, 15a, 16a, 17a offen ausgebildet, so dass die Akkuzellen 12a, 13a, 14a, 15a, 16a, 17a entlang dieser Richtung in die Akkuzellenträger 86a eingeführt und ausgeführt werden können. Die Akkuzellenträger 86a befestigen die Akkuzellen 12a, 13a, 14a, 15a, 16a, 17a relativ zueinander und umgeben sie in einer Richtung senkrecht zu den Haupterstreckungsrichtungen 74a, 76a teilweise. Die Spulenkerneinheit 24a ist zwischen der Induktivladespule 22a und den Akkuzellen 12a, 13a, 14a, 15a, 16a, 17a angeordnet und trennt diese voneinander (Fig. 6). In Fig. 1 ist die Induktivladespule 22a zur Darstellung ihrer relativen Anordnung zu den Akkuzellen 12a, 13a, 14a, 15a, 16a, 17a gestrichelt dargestellt. Der Handwerkzeugakku 10a umfasst ferner ein Akkugehäuse 18a für eine Aufnahme der Induktivladeeinheit 20a und der Akkuzellen 12a, 13a, 14a, 15a, 16a, 17a mit einem Spulenaufnahmebereich 44a zur Aufnahme der Induktivladespule 22a, der zumindest teilweise ein Formschlusselement bildet, und einem Akkuzellenaufnahmebereich 46a zur Aufnahme der weiteren Akkuzellen 13a, 15a, 17a aufweist, der relativ zu dem Spulenaufnahmebereich 44a zurücksteht. In einer Ebene senkrecht zu der Haupterstreckungsrichtung 74a der ersten Akkuzellen 12a, 14a, 16a betrachtet, übersteht der Spulenaufnahmebereich 44a entlang zumindest einer Achse den Akkuzellenaufnahmebereich 46a. Das Akkugehäuse 18a weist ein zentrales Gehäusebauteil 30a und zwei seitliche Gehäusebauteile 32a, 34a, die den Spulenaufnahmebereich 44a und den Akkuzellenaufnahmebereich 46a ausbilden, auf und ist aus einem Kunststoff hergestellt. Die Gehäusebauteile 32a, 34a, die den Spulenaufnahmebereich 44a ausbilden, definieren eine linke Seite und eine rechte Seite und Endbereiche des zentralen Gehäusebauteils 30a definieren eine Vorderseite und eine Rückseite des Handwerkzeugakkus 10a, wobei an der Vorderseite des Handwerkzeugakkus 10a eine LED-Elemente aufweisende Anzeige zu einer Signalisierung eines Ladezustands angeordnet ist. Der Handwerkzeugakku 10a weist zudem nicht genauer dargestellte Verbindungselemente zur Herstellung einer elektrisch leitenden Verbindung zwischen den Akkuzellen 12a, 13a, 14a, 15a, 16a, 17a und einem Stromabnehmer auf.

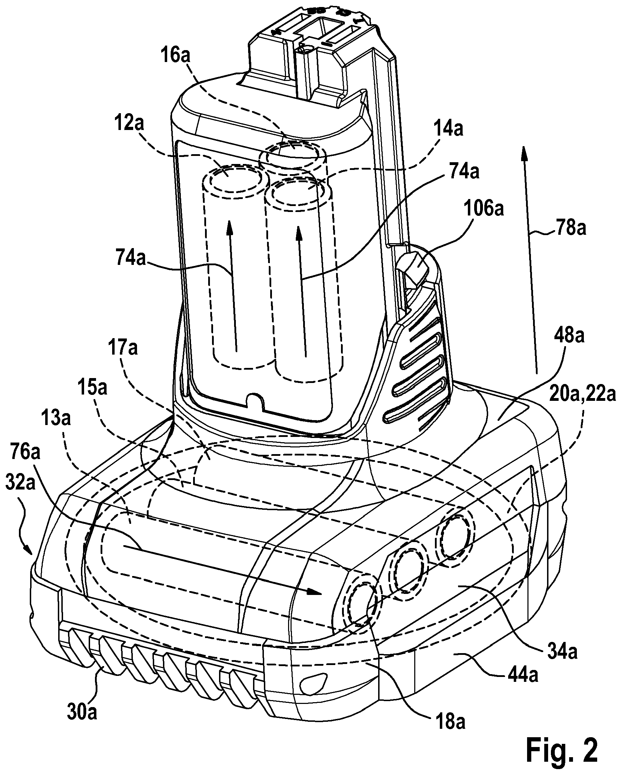

Fig. 2 zeigt den in Fig. 1 dargestellten Handwerkzeugakku 10a mit einem vollständig geschlossenen Akkugehäuse 18a mit einem Gehäusebauteil 48a, das auf die Gehäusebauteile 30a, 32a, 34a aufgesetzt ist und einen oberen Abschluss bildet. Das Gehäusebauteil 48a umschließt die ersten Akkuzellen 12a, 14a, 16a und weist an gegenüberliegenden Seiten Verriegelungselemente 106a auf, die als Rastelemente ausgebildet sind. An dem in Fig. 2 oberen Ende des Akkugehäuses 18a umfasst der Handwerkzeugakku 10a einen in Fig. 2 nicht näher bezeichneten Kontaktbereich mit elektrischen Kontaktelementen zur elektrischen Kontaktierung mit komplementären elektrischen Kontaktelementen einer Handwerkzeugmaschine.

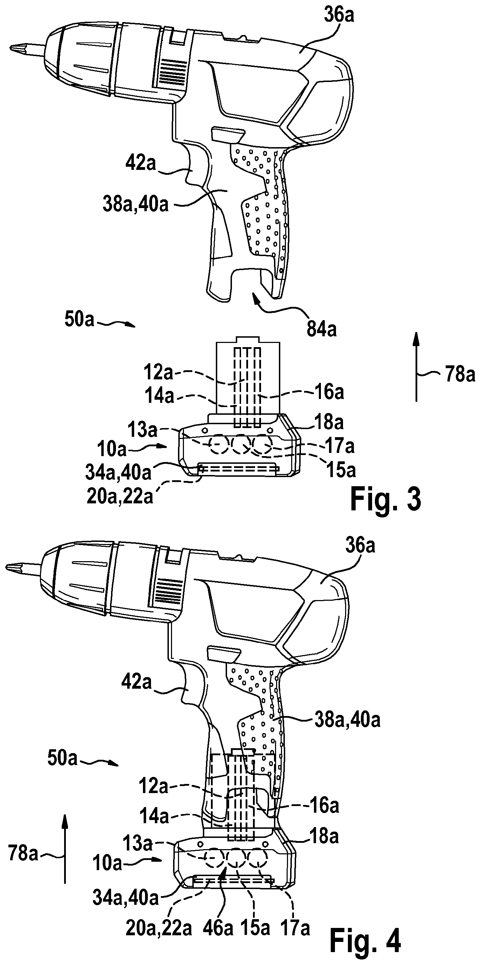

Fig. 3 zeigt ein System 50a aus einer Handwerkzeugmaschine 36a und dem erfindungsgemäßen Handwerkzeugakku 10a in einem unmontierten Zustand. Die Handwerkzeugmaschine 36a ist von einem Akku-Bohrschrauber gebildet, der einen Handgriff 38a mit einem Handgriffgehäuse 40a, das eine Handwerkzeugakkuaufnahme 84a umschließt, aufweist. An dem Handgriff 38a ist ein Betätigungsschalter 42a angeordnet, der bei Betätigung einen Stromkreis zwischen dem Handwerkzeugakku 10a und der Handwerkzeugmaschine 36a schließt, so dass die Handwerkzeugmaschine 36a mit Strom für einen Betrieb versorgt wird. Ein Gehäusebauteil 48a, welches in der dargestellten Ausführungsform als Gehäusedeckel ausgebildet ist, bildet zusammen mit den Gehäusebauteilen 30a, 32a, 34a das Akkugehäuse 18a des Handwerkzeugakkus 10a. Der Handwerkzeugakku 10a wird mittels der Verriegelungselemente 106a an dem Gehäusebauteil 48a an der Handwerkzeugmaschine 36a befestigt. Der Handwerkzeugakku 10a wird werkzeuglos durch Einstecken in die Handwerkzeugakkuaufnahme 84a mit den Verriegelungselementen 106a an der Handwerkzeugmaschine 36a befestigt (Fig. 4). Eine Montagerichtung 78a für die Montage des Handwerkzeugakkus 10a an die Handwerkzeugmaschine 36a verläuft senkrecht zu der Spulenebene der Induktivladeeinheit 20a und somit parallel zu der Haupterstreckungsrichtung 74a der ersten Akkuzellen 12a 14a, 16a. Der Handwerkzeugakku 10a wird somit mit einer Einsteckbewegung an die Handwerkzeugmaschine 36a montiert. Die ersten Akkuzellen 12a 14a, 16a sind dabei in einem montierten Zustand der Handwerkzeugmaschine 36a und des Handwerkzeugakkus 10a auf sechzig Prozent einer Länge entlang der Haupterstreckungsrichtung 74a auf einer Ebene senkrecht zu der Haupterstreckungsrichtung 74 entlang eines Winkelbereichs von dreihundertsechzig Grad von dem Handgriffgehäuse 40a umgeben. Die Induktivladespule 22a ist in dem montierten Zustand außerhalb des Handgriffgehäuses 40a angeordnet, wobei ein Gesamtvolumen der Induktivladespule 22a außerhalb des Handgriffgehäuses 40a liegt. Die weiteren Akkuzellen 13a, 15a, 17a sind in dem montierten Zustand ebenfalls außerhalb des Handgriffgehäuses 40a angeordnet. Die Handwerkzeugmaschine 36a und der Handwerkzeugakku 10a sind werkzeuglos voneinander trennbar und der Handwerkzeugakku 10a kann nach Betätigung eines nicht dargestellten Freigabeelements aus der Handwerkzeugakkuaufnahme 84a ausgezogen werden.

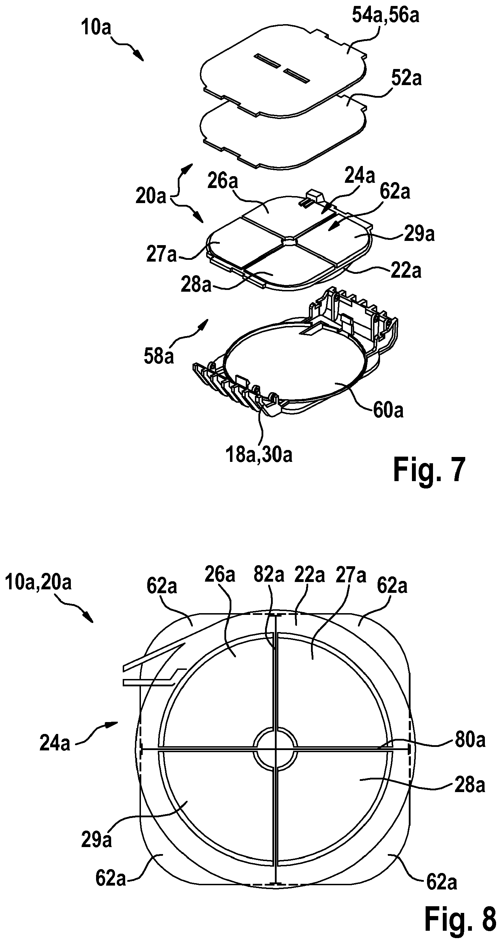

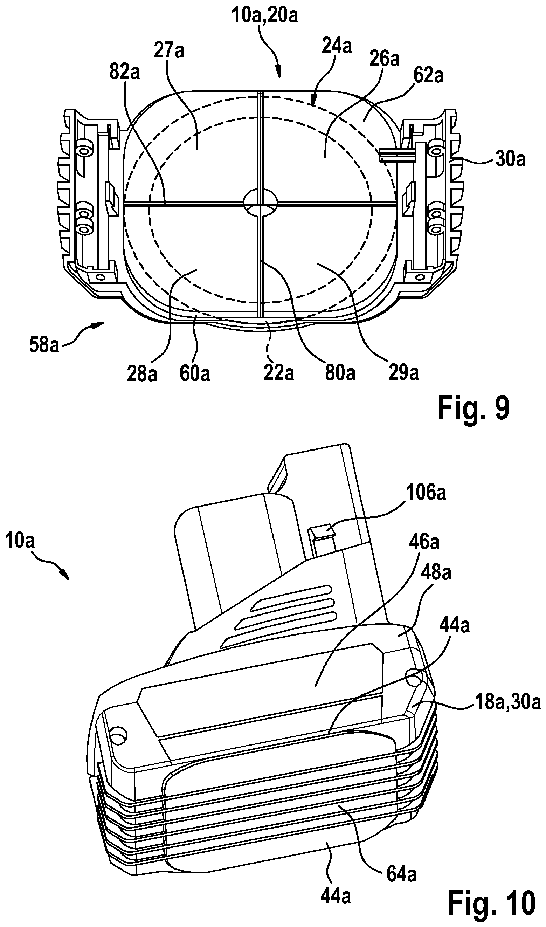

Ein Durchmesser der Induktivladespule 22a ist größer als eine Haupterstreckungslänge der weiteren Akkuzellen 13a, 15a, 17a, die von einer Länge entlang der Haupterstreckungsrichtung 76a gebildet ist (Fig. 5). Der Durchmesser der Induktivladespule 22a ist zudem größer als ein Durchmesser der ersten Akkuzellen 12a, 14a, 16a in einer Richtung senkrecht zur Haupterstreckungsrichtung 74a. Zudem ist der Durchmesser der Induktivladespule größer als eine Länge einer maximalen Erstreckung der ersten Akkuzellen 12a, 14a, 16a, beispielsweise einer Diagonalen zwischen zwei diametral entgegengesetzten Eckbereichen der ersten Akkuzellen 12a, 14a, 16a. Der Durchmesser der Induktivladespule 22a ist zudem größer als eine Haupterstreckungslänge der ersten Akkuzellen 12a, 14a, 16a. Somit übersteht die Induktivladespule 22a alle Akkuzellen 12a, 13a, 14a, 15a, 16a, 17a, wodurch eine schnelle Ladung der Akkuzellen 12a, 13a, 14a, 15a, 16a, 17a erreicht wird. Die Induktivladespule 22a ist in dem Spulenaufnahmebereich 44a des Akkugehäuses 18a angeordnet, der den Akkuzellenaufnahmebereich 46a übersteht. Die Induktivladespule 22a ist durch den Plattenbereich 62a der Spulenkerneinheit 24a von den Akkuzellen 12a, 13a, 14a, 15a, 16a, 17a getrennt und in Fig. 5 zur Darstellung der Position in den durch den Plattenbereich 62a überdeckten Bereichen gestrichelt dargestellt. Der Plattenbereich 62a ist rechteckig ausgebildet und weist eine Form eines Quadrats mit abgerundeten Ecken auf. Achsenlängen 80a, 82a des Plattenbereichs 62a sind kleiner als ein Durchmesser der Induktivladespule 22a (Fig. 8). Die Spulenkerneinheit 24a weist vier getrennte Kernstücke 26a, 27a, 28a, 29a auf, die jeweils Vierteln des Quadrats mit abgerundeten Ecken entsprechen (Fig. 9). Die einzelnen Kernstücke 26a, 27a, 28a, 29a liegen in einem Spulenträger 60a auf, in dem auch die Induktivladespule 22a aufgespannt ist und werden durch Plastikelemente des Spulenträgers 60a voneinander getrennt. In einem von den abgerundeten Ecken abgewandten Bereich weisen die einzelnen Kernstücke 26a, 27a, 28a, 29a an einer Seite einen Bereich mit einer erhöhten Dicke auf, der im montierten Zustand innerhalb der Spulenebene der Induktivladespule 22a angeordnet ist. Die Bereiche mit erhöhter Dicke sind in dem montierten Zustand von der Induktivladespule 22a umschlossen und grenzen an diese an (Fig. 8).

Die Induktivladeeinheit 20a umfasst die Induktivladespule 22a, die Spulenkerneinheit 24a, eine Ladeelektronik 52a, den Spulenträger 60a, das zentrale Gehäusebauteil 30a, welches den Spulenträger 60a befestigt, und ein Wärmeverteilungselement 54a und ist als ein vormontiertes Modul 58a ausgebildet, welches separat entnommen werden kann, so dass Induktivladespule 22a und Ladeelektronik 52a auf ihre Funktion überprüft werden können (Fig. 7). Das Wärmeverteilungselement 54a ist dazu vorgesehen, eine Abwärme der Ladeelektronik 52a bei einer Aufladung der Akkuzellen 12a, 13a, 14a, 15a, 16a, 17a und eine Abwärme der Akkuzellen 12a, 13a, 14a, 15a, 16a, 17a bei einer Entladung zu verteilen, so dass lokale Überhitzungen vermieden werden. Das Wärmeverteilungselement 54a ist hierzu als ein Bügel ausgebildet, der sich entlang einer Hauptachse des zentralen Gehäusebauteils 30a durch den Handwerkzeugakku 10a erstreckt (Fig. 6). Seitenbereiche des Wärmeverteilungselements 54a sind in Kontakt mit der Ladeelektronik 52a und ein zentraler Bereich des Wärmeverteilungselements 54a ist an einer Seite in Kontakt mit dem Akkuzellenträger 86a, in dem die Akkuzellen 12a, 13a, 14a, 15a, 16a, 17a angeordnet sind, so dass Wärme zwischen Akkuzellen 12a, 13a, 14a, 15a, 16a, 17a und der Ladeelektronik 52a über das Wärmeverteilungselement 54a fließen kann. Das Wärmeverteilungselement 54a weist eine Wärmeleitbeschichtung 56a aus Aluminium auf. In einer alternativen Ausgestaltung kann das Wärmeverteilungselement 54a auch als ein vollständig aus Aluminium hergestelltes Bauteil ausgebildet sein. Die Ladeelektronik 52a ist teilweise mit einer Kupferschicht zu einer Abschirmung der Akkuzellen 12a, 13a, 14a, 15a, 16a, 17a gegen die Induktivladespule 22a beschichtet.

Fig. 10 zeigt eine Ansicht auf den Handwerkzeugakku 10a von schräg unten, mit Sicht auf eine von den ersten Akkuzellen 12a, 14a, 16a und dem Gehäusebauteil 48a abgewandte Unterseite des Akkugehäuses 18a. An der Unterseite ist ein Positionierungsvorsprung 64a mit einer quadratischen Grundform, welche abgerundete Ecken aufweist, angeordnet, der bei einer Aufstellung des Handwerkzeugakkus 10a mit der Unterseite auf einem Boden einen Kontakt mit dem Boden aufweist, wogegen andere Teilbereiche der Unterseite frei von einem Kontakt mit dem Boden sind. Der Positionierungsvorsprung 64a ist ferner zu einem Eingriff in eine Positionierungsausnehmung 68a einer Induktivladevorrichtung 66a vorgesehen.

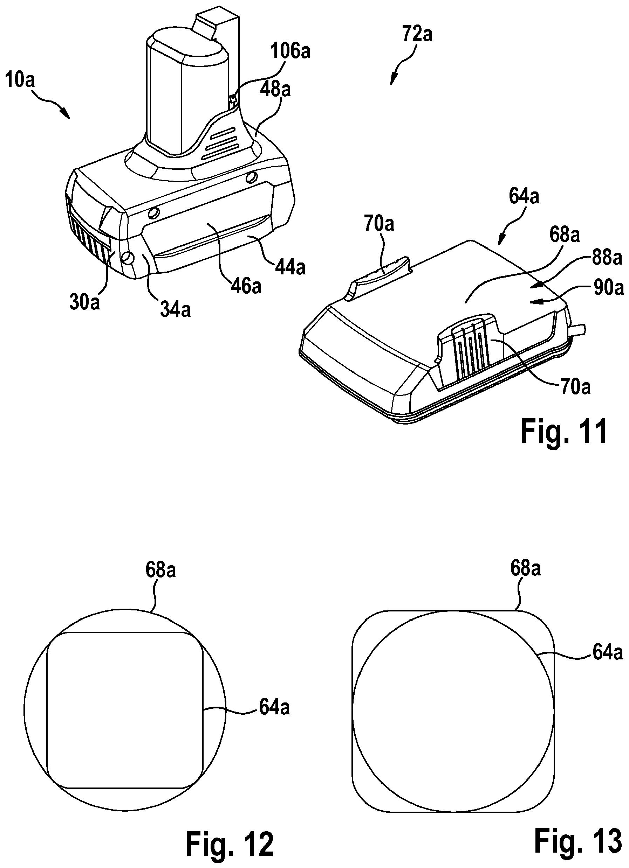

Fig. 11 zeigt ein System 72a mit der Induktivladevorrichtung 66a, die ein Induktivladegerät 88a umfasst, und dem Handwerkzeugakku 10a. Das Induktivladegerät 88a weist an einer Oberseite eine Aufstellfläche 90a mit der Positionierungsausnehmung 68a auf, auf die der Handwerkzeugakku 10a zu einer Aufladung der Akkuzellen 12a, 13a, 14a, 15a, 16a, 17a aufgestellt wird. Die Positionierungsausnehmung 68a weist eine kreisförmige Grundform und eine Tiefe von 3 mm auf. Es sind jedoch auch andere, einem Fachmann als sinnvoll erscheinende Maße denkbar, wie beispielsweise eine Tiefe von 2 mm, 5mm oder lediglich 1 mm. Der Positionierungsvorsprung 64a weist eine der Tiefe der Positionierungsausnehmung 68a entsprechende Absatzhöhe auf. Der Positionierungsvorsprung 64a und die Positionierungsausnehmung 68a weisen somit voneinander abweichenden Grundformen auf. Abmessung von Positionierungsvorsprung 64a und Positionierungsausnehmung 68a sind aneinander angepasst und insbesondere die Abmessungen der Positionierungsausnehmung 68a sind daraufhin angepasst, den Positionierungsvorsprung 64a sicher und mit geringem Spiel zu umgeben. Zwischen den Abmessungen des Positionierungsvorsprungs 64a und der Positionierungsausnehmung 68a ist eine geringe Toleranz vorgesehen. Ein Einrasten des Positionierungsvorsprungs 64a in die Positionierungsausnehmung 68a ist haptisch von einem Bediener wahrnehmbar und signalisiert dem Bediener eine für einen Ladevorgang optimale Positionierung des Handwerkzeugakkus 10a auf dem Induktivladegerät 88a der Induktivladevorrichtung 66a. In der dargestellten Variante ist der Positionierungsvorsprung 64a mit der quadratischen Grundform mit abgerundeten Ecken zur Aufnahme in der kreisförmigen Positionierungsausnehmung 68a vorgesehen (Fig. 12), alternativ kann auch der Positionierungsvorsprung 64a eine kreisförmige Grundform aufweisen und zur Aufnahme innerhalb einer Positionierungsausnehmung 68a mit einer quadratischen Grundform vorgesehen sein (Fig. 13). Auch ist es alternativ möglich, dass das Induktivladegerät 88a der Induktivladevorrichtung 66a einen Positionierungsvorsprung 64a und der Handwerkzeugakku 10a eine Positionierungsausnehmung 68a aufweist.

Bei der Aufladung der Akkuzellen 12a, 13a, 14a, 15a, 16a, 17a wird elektrische Energie mittels Induktion durch eine nicht dargestellte Induktionsspule des Induktivladegeräts 88a der Induktivladevorrichtung 66a an die Induktivladespule 22a des Handwerkzeugakkus 10a übertragen und induziert dort einen elektrischen Strom. Mittels der Ladeelektronik 52a wird der elektrische Strom transformiert und die Aufladung gesteuert. Durch die Aufnahme des Positionierungsvorsprungs 64a in der Positionierungsausnehmung 68a bei Aufstellung des Handwerkzeugakkus 10a auf das Induktivladegerät 88a der Induktivladevorrichtung 66a während einer Ladephase des Handwerkzeugakkus 10a sind die Induktivladespule 22a des Handwerkzeugakkus 10a und die Induktionsspule des Induktivladegeräts 88a der Induktivladevorrichtung 66a relativ zueinander in einer Position angeordnet, in der eine hohe Übertragungseffizienz erreicht wird. Eine relative Verschiebung des Handwerkzeugakkus 10a und des Induktivladegeräts 88a der Induktivladevorrichtung 66a zueinander während der Ladephase, beispielsweise durch versehentliches Anstoßen, wird durch die Aufnahme des Positionierungsvorsprungs 64a in der Positionierungsausnehmung 68a teilweise vermieden. Zudem weist das Induktivladegerät 88a der Induktivladevorrichtung 66a Formschlusselemente 70a zu einer Befestigung des Handwerkzeugakkus 10a während der Ladephase auf. Die Formschlusselemente 70a sind als Haltelaschen ausgebildet und weisen eine Formschlussausnehmung auf, die zur Aufnahme des Spulenaufnahmebereichs 44a des Handwerkzeugakkus 10a vorgesehen ist. Die Formschlusselemente 70a sind an gegenüberliegenden Seiten des Induktivladegeräts 88a der Induktivladevorrichtung 66a federnd gelagert angebracht und können in einer Richtung parallel zu einer Normalenrichtung der Aufstellfläche 90a ausgelenkt werden. Zu einer Aufstellung auf und Befestigung des Handwerkzeugakkus 10a an dem Induktivladegerät 88a der Induktivladevorrichtung 66a wird der Handwerkzeugakku 10a mit einer Neigung an die Induktivladevorrichtung 66a angesetzt, so dass der Spulenaufnahmebereich 44a die Formschlusselemente 70a an einer Seite untergreift. Der Handwerkzeugakku 10a wird anschließend parallel zu der Aufstellfläche 90a ausgerichtet, so dass die Formschlusselemente 70a in eine Richtung nach oben, von der Aufstellfläche 90a weggerichtet, in Richtung der Normalenrichtung, ausgelenkt werden. Der Handwerkzeugakku 10a wird nun zwischen den Formschlusselementen 70a auf der Aufstellfläche 90a eingeschoben, bis der Positionierungsvorsprung 64a in die Positionierungsausnehmung 68a eingreift. Die Formschlusselemente 70a umgreifen anschließend den Spulenaufnahmebereich 44a des Akkugehäuses 18a von oben. Die Formschlusselemente 70a sichern nun den Handwerkzeugakku 10a in seiner Position gegen ein Abheben. Zu einer Entfernung des Handwerkzeugakkus 10a von dem Induktivladegerät 88a der Induktivladevorrichtung 66a, wird der Handwerkzeugakku 10a mit einer Bewegung, bei der der Handwerkzeugakku 10a in einer Richtung entlang einer Haupterstreckung der Formschlussausnehmung der Formschlusselemente 70a gezogen und gleichzeitig in Normalenrichtung der Aufstellfläche 90a angehoben wird, aus der Induktivladevorrichtung 66a gezogen. Die Formschlusselemente 70a sind an einen Hauptkörper des Induktivladegeräts 88a der Induktivladevorrichtung 66a mit einer Klippbefestigung angebracht und werkzeuglos von dem Hauptkörper abnehmbar ausgebildet.

Grundsätzlich können die Formschlusselemente 70a auch einstückig untrennbar mit dem Hauptkörper verbunden ausgeführt werden. In einer weiteren möglichen, alternativen Ausgestaltung können die Formschlusselemente 70a seitlich auslenkbar federnd gelagert sein und zu einer Befestigung des Handwerkzeugakkus 10a seitlich ausgelenkt werden. Zu einer Entnahme des Handwerkzeugakkus 10a in der alternativen Ausgestaltung des Induktivladegeräts 88a der Induktivladevorrichtung 66a werden die Formschlusselemente 70a erneut seitlich ausgelenkt, so dass der Handwerkzeugakku 10a ausgezogen werden kann.

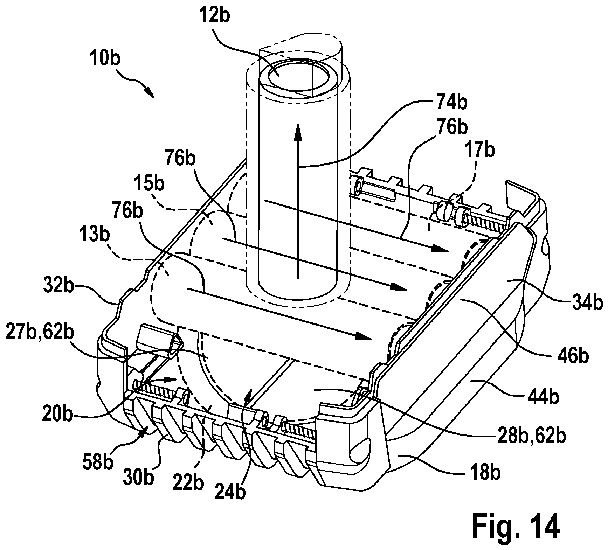

In den Figuren 14 bis 17 sind drei weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 13 verwiesen wird. Zur Unterscheidung der Ausführungsbeispiele ist der Buchstabe a den Bezugszeichen des Ausführungsbeispiels in den Figuren 1 bis 13 nachgestellt. In den Ausführungsbeispielen der Figuren 14 bis 17 ist der Buchstabe a durch die Buchstaben b bis d ersetzt.

Fig. 14 zeigt ein alternatives Ausführungsbeispiel eines erfindungsgemäßen Handwerkzeugakkus 10b mit einer ersten Akkuzelle 12b, drei weiteren Akkuzellen 13b, 15b, 17b und einer Induktivladeeinheit 20b, die eine Induktivladespule 22b zur Aufladung der ersten Akkuzelle 12b und der weiteren Akkuzellen 13b, 15b, 17b aufweist, bei dem die erste Akkuzelle 12b eine Haupterstreckungsrichtung 74b aufweist, die senkrecht zu einer Spulenebene der Induktivladeeinheit 20b ausgerichtet ist. Die drei weiteren Akkuzellen 13b, 15b, 17b weisen eine Haupterstreckungsrichtung 76b auf, die in einer Spulenebene der Induktivladeeinheit 20b verläuft. Der Handwerkzeugakku 10b ist analog zum vorherigen Ausführungsbeispiel ausgeführt, weist aber eine Induktivladespule 22b mit einem geringeren Durchmesser als in dem vorherigen Beispiel auf. Da der Handwerkzeugakku 10b eine einzelne erste Akkuzelle 12b mit einer senkrecht zu der Spulenebene der Induktivladeeinheit 20b verlaufenden Haupterstreckungsrichtung 74b aufweist, kann der Handwerkzeugakku 10b in ein Handgriffgehäuse mit einem geringeren Durchmesser eingesteckt werden als der im vorherigen Ausführungsbeispiel dargestellte Handwerkzeugakku 10a. Die erste Akkuzelle 12b ist mit der weiteren Akkuzelle 13b einer Reihenschaltung zu einem ersten Zellenblock mit einer Gesamtspannung von 7,2 V zusammengeschaltet, und die weiteren Akkuzellen 15b, 17b sind zu einem zweiten Zellenblock mit einer Gesamtspannung von 7,2 V zusammengeschaltet, welcher nach Entladung des ersten Zellenblocks zur Stromversorgung verwendet wird. Grundsätzlich kann der Handwerkzeugakku 10b auch lediglich eine einzelne Akkuzelle 12b umfassen, was durch eine gestrichelte Darstellung der weiteren Akkuzellen 13b, 15b, 17b angedeutet ist.

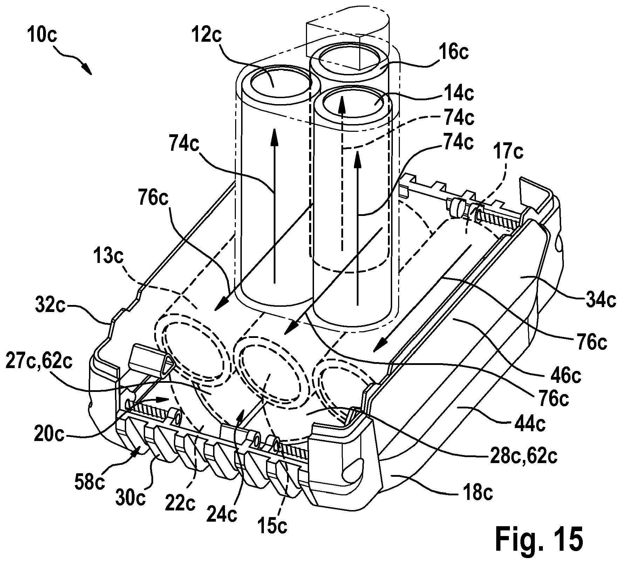

Fig. 15 zeigt ein drittes Ausführungsbeispiel eines erfindungsgemäßen Handwerkzeugakkus 10c mit drei ersten Akkuzellen 12c, 14c, 16c und einer Induktivladeeinheit 20c, die eine Induktivladespule 22c zur Aufladung der ersten Akkuzellen 12c, 14c, 16c aufweist, bei dem die ersten Akkuzellen 12c, 14c, 16c eine Haupterstreckungsrichtung 74c aufweisen, die senkrecht zu einer Spulenebene der Induktivladeeinheit 20c ausgerichtet ist. Der Handwerkzeugakku 10c weist ferner drei weitere Akkuzellen 13c, 15c, 17c mit einer Haupterstreckungsrichtung 76c auf, die parallel zu der Spulenebene der Induktivladeeinheit 20c ausgerichtet ist. Das Ausführungsbeispiel entspricht weitgehend dem ersten Ausführungsbeispiel, lediglich verläuft die Haupterstreckungsrichtung 76c der drei weiteren Akkuzellen 13c, 15c, 17c des dritten Ausführungsbeispiels senkrecht zu der Haupterstreckungsrichtung 76a der drei weitere Akkuzellen 13a, 15a, 17a des ersten Ausführungsbeispiels.

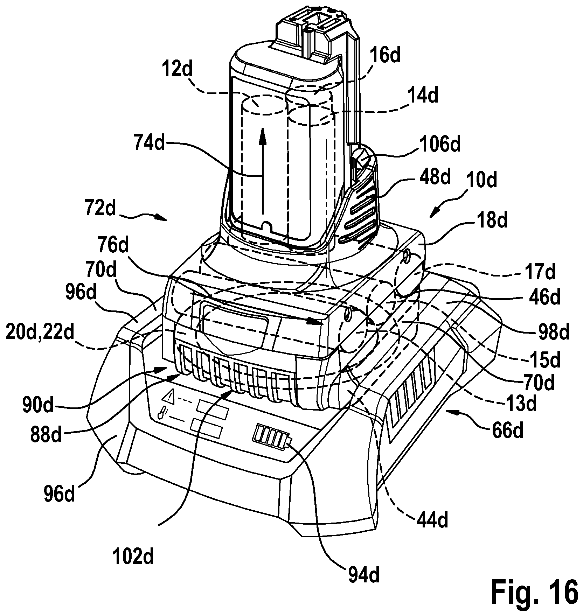

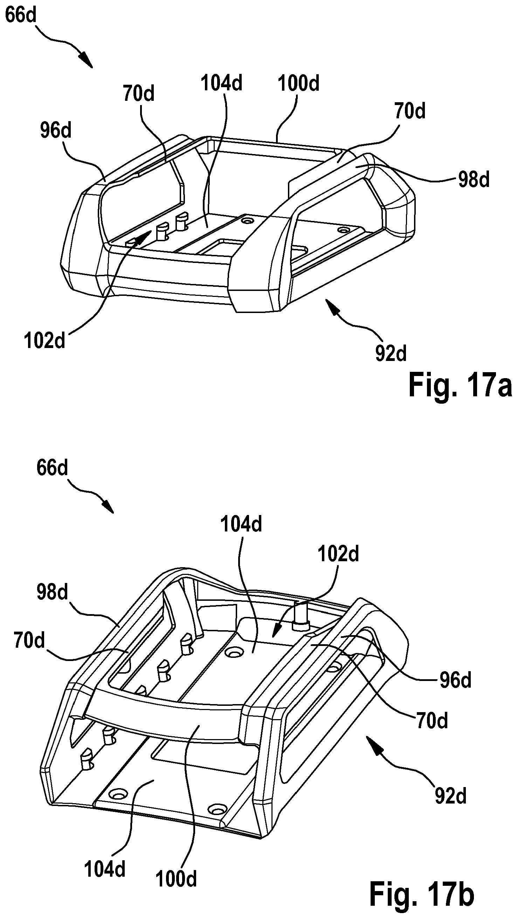

Eine alternative Ausführung eines Systems 72d mit einer alternativen Ausbildung einer Induktivladevorrichtung 66d und einem Handwerkzeugakku 10d ist in Fig. 16 dargestellt. Der Handwerkzeugakku 10d entspricht in seiner Ausführung der des ersten Ausführungsbeispiels. Die Induktivladevorrichtung 66d umfasst ein Induktivladegerät 88d, das im Wesentlichen analog zu dem ersten Ausführungsbeispiel ausgeführt ist, und zusätzlich einen Rahmen 92d, der die Formschlusselemente 70d der Induktivladevorrichtung 66a zu einer Befestigung des Handwerkzeugakkus 10d während einer Ladephase aufweist. Der Rahmen 92d weist eine von Oberflächen von Rahmenbauteilen gebildete Auflage 104d auf, über die sich zwei Seitenbügel 96d, 98d und an einer Seite ein quer dazu verlaufender Haltebügel 100d erheben (Fig. 17a, 17b). Der Haltebügel 100d erstreckt sich dabei von dem Seitenbügel 96d zu dem Seitenbügel 98d. Das Induktivladegerät 88d wird auf die Auflage 104d aufgestellt und ist dann innerhalb des Rahmens 92d angeordnet. Gegenüber dem Haltebügel 100d ist eine als Einschuböffnung 102d ausgebildete Seite des Rahmens 92d angeordnet, die zu einer Einschiebung der Handwerkzeugakkus 10d in die Formschlusselemente 70d und auf die Aufstellfläche 90d vorgesehen ist (Fig. 16). Die Formschlusselemente 70d sind dazu vorgesehen, den Spulenaufnahmebereich 44d eines Akkugehäuses 18d des Handwerkzeugakkus 10d, der gegenüber einem Akkuzellenaufnahmebereich 46d vorsteht, während der Ladephase von oben zu umgreifen, so dass der Handwerkzeugakku 10d in einer Position auf der Aufstellfläche 90d gesichert ist. Der Handwerkzeugakku 10d und das Induktivladegerät 88d der Induktivladevorrichtung 66d weisen ein Paar aus einer Positionierungsausnehmung und einem Positionierungsvorsprung mit voneinander abweichenden Grundformen auf, die in Fig. 16 aus perspektivischen Gründen nicht dargestellt sind. Der Rahmen 92d ist aus einem Kunststoff hergestellt und besteht aus zwei Teilschalen, die über Schrauben fest miteinander verbunden sind. Grundsätzlich ist es auch vorstellbar, dass der Rahmen 92d als ein einziges festes Bauteil ausgebildet ist.

## Patentansprüche

1. Handwerkzeugakku mit mindestens drei Akkuzellen (12a-d, 14a; 14c-d, 16a; 16c-d) und zumindest einer Induktivladeeinheit (20a-d), die zumindest eine Induktivladespule (22a-d) zur Aufladung der mindestens drei Akkuzellen (12a-d, 14a; 14c-d, 16a; 16c-d) aufweist, wobei die mindestens drei Akkuzellen (12a-d, 14a; 14c-d, 16a; 16c-d) eine Haupterstreckungsrichtung (74a-d) aufweisen, die zumindest im Wesentlichen senkrecht zu einer Spulenebene der Induktivladeeinheit (20a-d) ausgerichtet ist, **dadurch gekennzeichnet, dass** der Durchmesser der Induktivladespule (22a-d) größer als ein Durchmesser der mindestens drei Akkuzellen (12a-d, 14a; 14c-d, 16a; 16c-d) in einer Richtung senkrecht zur Haupterstreckungsrichtung (74a) der mindestens drei Akkuzellen (12a-d, 14a; 14c-d, 16a; 16c-d) ist.

2. Handwerkzeugakku nach Anspruch 1, **gekennzeichnet durch** mindestens eine weitere Akkuzelle (13a-d, 15a-d, 17a-d) mit einer Haupterstreckungsrichtung (76a; 76c-d), die zumindest im Wesentlichen parallel zu der Spulenebene der Induktivladeeinheit (20a; 20c-d) ausgerichtet ist.

3. Handwerkzeugakku nach Anspruch 2, **dadurch gekennzeichnet, dass** die mindestens eine weitere Akkuzelle (13a-d, 15a-d, 17a-d) zwischen der mindestens einen ersten Akkuzelle (12a-d, 14a; 14c-d, 16a; 16c-d) und der Induktivladespule (22a-d) angeordnet ist.

4. Handwerkzeugakku nach Anspruch 2 oder 3, **dadurch gekennzeichnet, dass** ein Durchmesser der Induktivladespule (22a-d) größer als eine Haupterstreckungslänge der mindestens einen weiteren Akkuzelle (13a-d, 15a-d, 17a-d) ist.

5. Handwerkzeugakku nach einem der vorhergehenden Ansprüche, **gekennzeichnet durch** ein Akkugehäuse (18a-d) mit einem Spulenaufnahmebereich (44a-d) zur Aufnahme der Induktivladespule (22a-d), der zumindest teilweise ein Formschlusselement bildet.

6. Handwerkzeugakku nach einem der vorhergehenden Ansprüche, **gekennzeichnet durch** ein Akkugehäuse (18a-d) mit einem Spulenaufnahmebereich (44a-d) zur Aufnahme der Induktivladespule (22a-d) und einem Akkuzellenaufnahmebereich (46a, 46d) zur Aufnahme der mindestens drei Akkuzellen (12a-d, 14a; 14c-d, 16a; 16c-d), der relativ zu dem Spulenaufnahmebereich (44a-d) zurücksteht.

7. Handwerkzeugakku nach einem der vorhergehenden Ansprüche, **gekennzeichnet durch** ein Akkugehäuse (18a-d) mit einem Spulenaufnahmebereich (44a-d) zur Aufnahme der Induktivladespule (22a-d) und Akkuzellenaufnahmebereich (46a, 46d) zur Aufnahme der mindestens drei Akkuzellen (12a-d, 14a; 14c-d, 16a; 16c-d), wobei der Spulenaufnahmebereich eine Ausdehnung aufweist, die in zumindest einer Richtung geringer als eine Ausdehnung des Akkuzellenaufnahmebereich (46a, 46d) ist.

8. Handwerkzeugakku nach einem der vorhergehenden Ansprüche, **dadurch gekennzeichnet, dass** die Induktivladeeinheit (20a-c) eine Spulenkerneinheit (24a-c) mit einem Plattenbereich (62a-c) aufweist, der die mindestens eine erste Akkuzelle (12a-c, 14a; 14c, 16a; 16c) zumindest teilweise gegen die Induktivladespule (22a-c) abschirmt.

9. Handwerkzeugakku nach Anspruch 8, **dadurch gekennzeichnet, dass** der Plattenbereich (62a-c) zumindest im Wesentlichen rechteckig ausgebildet ist.

10. Handwerkzeugakku nach einem der vorhergehenden Ansprüche, **gekennzeichnet durch** zumindest ein Wärmeverteilungselement (54a), das dazu vorgesehen ist, eine Abwärme zu verteilen.

11. Handwerkzeugakku nach einem der vorhergehenden Ansprüche, **dadurch gekennzeichnet, dass** die Induktivladeeinheit (20a-c) als ein vormontiertes Modul (58a-c) ausgebildet ist.

12. System aus einer Handwerkzeugmaschine (36a) und einem Handwerkzeugakku (10a) nach einem der Ansprüche 1 bis 11.

13. System nach Anspruch 12, **dadurch gekennzeichnet, dass** die Handwerkzeugmaschine (36a) und der Handwerkzeugakku (10a) werkzeuglos voneinander trennbar sind.

14. System nach Anspruch 13, **dadurch gekennzeichnet, dass** die mindestens eine erste Akkuzelle (12a, 14a, 16a) in einem montierten Zustand der Handwerkzeugmaschine (36a) und des Handwerkzeugakkus (10a) zumindest im Wesentlichen von einem Handgriffgehäuse (40a) umgeben ist.

15. System nach Anspruch 13 oder 14, **gekennzeichnet durch** eine Montagerichtung (78a) für eine Montage des Handwerkzeugakkus (10a) an die Handwerkzeugmaschine (36a), die zumindest im Wesentlichen senkrecht zu einer Spulenebene der Induktivladeeinheit (20a) verläuft.

16. System mit einer Induktivladevorrichtung (66a; 66d) und einem Handwerkzeugakku (10a; 10d) nach einem der Ansprüche 1 bis 11.

17. System nach Anspruch 16, **dadurch gekennzeichnet, dass** die Induktivladevorrichtung (66a; 66d) Formschlusselemente (70a; 70d) zu einer Befestigung des Handwerkzeugakkus (10a; 10d) während einer Ladephase aufweist.

18. System nach Anspruch 16 oder 17, **dadurch gekennzeichnet, dass** die Induktivladevorrichtung (66a; 66d) und der Handwerkzeugakku (10a; 10dd) einen Positionierungsvorsprung (64a; 64d) und eine Positionierungsausnehmung (68a; 68d) mit voneinander abweichenden Grundformen aufweisen.

## Claims

1. Handheld tool rechargeable battery having at least three rechargeable battery cells (12a-d, 14a; 14c-d, 16a; 16c-d) and at least one inductive charging unit (20a-d) which has at least one inductive charging coil (22a-d) for charging the at least three rechargeable battery cells (12a-d, 14a; 14c-d, 16a; 16c-d), wherein the at least three rechargeable battery cells (12a-d, 14a; 14c-d, 16a; 16c-d) have a direction of main extent (74a-d) which is oriented at least substantially perpendicular in relation to a coil plane of the inductive charging unit (20a-d), **characterized in that** the diameter of the inductive charging coil (22a-d) is greater than a diameter of the at least three rechargeable battery cells (12a-d, 14a; 14c-d, 16a; 16c-d) in a direction perpendicular in relation to the direction of main extent (74a) of the at least three rechargeable battery cells (12a-d, 14a; 14c-d, 16a; 16c-d).

2. Handheld tool rechargeable battery according to Claim 1, **characterized by** at least one further rechargeable battery cell (13a-d, 15a-d, 17a-d) with a direction of main extent (76a; 76c-d) which is oriented at least substantially parallel in relation to the coil plane of the inductive charging unit (20a; 20c-d).

3. Handheld tool rechargeable battery according to Claim 2, **characterized in that** the at least one further rechargeable battery cell (13a-d, 15a-d, 17a-d) is arranged between the at least one first rechargeable battery cell (12a-d, 14a; 14c-d, 16a; 16c-d) and the inductive charging coil (22a-d).

4. Handheld tool rechargeable battery according to Claim 2 or 3, **characterized in that** a diameter of the inductive charging coil (22a-d) is greater than a length of main extent of the at least one further rechargeable battery cell (13a-d, 15a-d, 17a-d).

5. Handheld tool rechargeable battery according to one of the preceding claims, **characterized by** a rechargeable battery housing (18a-d) with a coil receiving region (44a-d) for receiving the inductive charging coil (22a-d), which coil receiving region at least partially forms an interlocking element.

6. Handheld tool rechargeable battery according to one of the preceding claims, **characterized by** a rechargeable battery housing (18a-d) with a coil receiving region (44a-d) for receiving the inductive charging coil (22a-d) and with a rechargeable battery cell receiving region (46a, 46d) for receiving the at least three rechargeable battery cells (12a-d, 14a; 14c-d, 16a; 16c-d), which rechargeable battery cell receiving region is recessed relative to the coil receiving region (44a-d).

7. Handheld tool rechargeable battery according to one of the preceding claims, **characterized by** a rechargeable battery housing (18a-d) with a coil receiving region (44a-d) for receiving the inductive charging coil (22a-d) and a rechargeable battery cell receiving region (46a, 46d) for receiving the at least three rechargeable battery cells (12a-d, 14a; 14c-d, 16a; 16c-d), wherein the coil receiving region has an expanse which is smaller than an expanse of the rechargeable battery cell receiving region (46a, 46d) in at least one direction.

8. Handheld tool rechargeable battery according to one of the preceding claims, **characterized in that** the inductive charging unit (20a-c) has a coil core unit (24a-c) with a plate region (62a-c) which at least partially shields the at least one first rechargeable battery cell (12a-c, 14a; 14c, 16a; 16c) from the inductive charging coil (22a-c).

9. Handheld tool rechargeable battery according to Claim 8, **characterized in that** the plate region (62a-c) is of at least substantially rectangular design.

10. Handheld tool rechargeable battery according to one of the preceding claims, **characterized by** at least one heat distribution element (54a) which is intended to distribute waste heat.

11. Handheld tool rechargeable battery according to one of the preceding claims, **characterized in that** the inductive charging unit (20a-c) is in the form of a preassembled module (58a-c).

12. System comprising a handheld machine tool (36a) and a handheld tool rechargeable battery (10a) according to one of Claims 1 to 11.

13. System according to Claim 12, **characterized in that** the handheld machine tool (36a) and the handheld tool rechargeable battery (10a) can be disconnected from one another without a tool.

14. System according to Claim 13, **characterized in that** the at least one first rechargeable battery cell (12a, 14a, 16a) is surrounded at least substantially by a handle housing (40a) when the handheld machine tool (36a) and the handheld tool rechargeable battery (10a) are in an assembled state.

15. System according to Claim 13 or 14, **characterized by** a fitting direction (78a) for fitting the handheld tool rechargeable battery (10a) to the handheld machine tool (36a), which fitting direction runs at least substantially perpendicular in relation to a coil plane of the inductive charging unit (20a).

16. System comprising an inductive charging apparatus (66a; 66d) and a handheld tool rechargeable battery (10a; 10d) according to one of Claims 1 to 11.

17. System according to Claim 16, **characterized in that** the inductive charging apparatus (66a; 66d) has interlocking elements (70a; 70d) for securing the handheld tool rechargeable battery (10a; 10d) during a charging phase.

18. System according to Claim 16 or 17, **characterized in that** the inductive charging apparatus (66a; 66d) and the handheld tool rechargeable battery (10a; 10dd) have a positioning projection (64a; 64d) and a positioning recess (68a; 68d) with basic shapes which differ from one another.

## Revendications

1. Accumulateur d'outil électroportatif comprenant au moins trois cellules d'accumulateur (12a-d, 14a ; 14c-d, 16a ; 16c-d) et au moins une unité de charge inductive (20a-d), laquelle possède au moins une bobine de charge inductive (22a-d) servant à charger les trois cellules d'accumulateur (12a-d, 14a ; 14c-d, 16a ; 16c-d), les au moins trois cellules d'accumulateur (12a-d, 14a ; 14c-d, 16a ; 16c-d) présentant une direction d'extension principale (74a-d) qui est orientée au moins sensiblement perpendiculairement à un plan de bobine de l'unité de charge inductive (20a-d), **caractérisé en ce que** le diamètre de la bobine de charge inductive (22a-d) est supérieur à un diamètre des au moins trois cellules d'accumulateur (12a-d, 14a ; 14c-d, 16a ; 16c-d) dans une direction perpendiculaire à la direction d'extension principale (74a) des au moins trois cellules d'accumulateur (12ad, 14a ; 14c-d, 16a ; 16c-d).

2. Accumulateur d'outil électroportatif selon la revendication 1, **caractérisé par** au moins une cellule d'accumulateur supplémentaire (13a-d, 15a-d, 17a-d) ayant une direction d'extension principale (76a ; 76c-d) qui est au moins sensiblement parallèle au plan de bobine de l'unité de charge inductive (20a ; 20c-d).

3. Accumulateur d'outil électroportatif selon la revendication 2, **caractérisé en ce que** l'au moins une cellule d'accumulateur supplémentaire (13a-d, 15a-d, 17a-d) est disposée entre l'au moins une première cellule d'accumulateur (12a-d, 14a ; 14c-d, 16a ; 16c-d) et la bobine de charge inductive (22a-d).

4. Accumulateur d'outil électroportatif selon la revendication 2 ou 3, **caractérisé en ce qu'**un diamètre de la bobine de charge inductive (22a-d) est supérieur à une longueur d'extension principale de l'au moins une cellule d'accumulateur supplémentaire (13a-d, 15a-d, 17a-d).

5. Accumulateur d'outil électroportatif selon l'une des revendications précédentes, **caractérisé par** un boîtier d'accumulateur (18a-d) muni d'une zone d'accueil de bobine (44a-d) destinée à accueillir la bobine de charge inductive (22a-d), lequel forme au moins partiellement un élément à complémentarité de formes.

6. Accumulateur d'outil électroportatif selon l'une des revendications précédentes, **caractérisé par** un boîtier d'accumulateur (18a-d) muni d'une zone d'accueil de bobine (44a-d) destinée à accueillir la bobine de charge inductive (22a-d) et d'une zone d'accueil de cellules d'accumulateur (46a ; 46d) destinée à accueillir les au moins trois cellules d'accumulateur (12a-d, 14a ; 14c-d, 16a ; 16c-d), laquelle est en retrait par rapport à la zone d'accueil de bobine (44a-d).

7. Accumulateur d'outil électroportatif selon l'une des revendications précédentes, **caractérisé par** un boîtier d'accumulateur (18a-d) muni d'une zone d'accueil de bobine (44a-d) destinée à accueillir la bobine de charge inductive (22a-d) et d'une zone d'accueil de cellules d'accumulateur (46a ; 46d) destinée à accueillir les au moins trois cellules d'accumulateur (12a-d, 14a ; 14c-d, 16a ; 16c-d), la zone d'accueil de bobine présentant une étendue qui, dans au moins une direction, est plus faible qu'une étendue de la zone d'accueil de cellules d'accumulateur (46a ; 46d).

8. Accumulateur d'outil électroportatif selon l'une des revendications précédentes, **caractérisé en ce que** l'unité de charge inductive (20a-c) possède une unité de noyau de bobine (24a-c) munie d'une zone formant plaque (62a-c), laquelle réalise au moins partiellement le blindage de l'au moins une première cellule d'accumulateur (12a-c, 14a ; 14c, 16a ; 16c) par rapport à la bobine de charge inductive (22a-c).

9. Accumulateur d'outil électroportatif selon la revendication 8, **caractérisé en ce que** la zone formant plaque (62a-c) est de configuration au moins sensiblement rectangulaire.

10. Accumulateur d'outil électroportatif selon l'une des revendications précédentes, **caractérisé par** au moins un élément de distribution de chaleur (54a) qui est conçu pour distribuer un rejet de chaleur.

11. Accumulateur d'outil électroportatif selon l'une des revendications précédentes, **caractérisé en ce que** l'unité de charge inductive (20a-c) est réalisée sous la forme d'un module prémonté (58a-c).

12. Système constitué d'une machine-outil électroportative (36a) et d'un accumulateur d'outil électroportatif selon l'une des revendications 1 à 11.

13. Système selon la revendication 12, **caractérisé en ce que** la machine-outil électroportative (36a) et l'accumulateur d'outil électroportatif (10a) peuvent être séparés l'un de l'autre sans outil.

14. Système selon la revendication 13, **caractérisé en ce que** l'au moins une première cellule d'accumulateur (12a, 14a, 16a), dans un état monté de la machine-outil électroportative (36a) et de l'accumulateur d'outil électroportatif (10a), est au moins sensiblement entourée par un boîtier de poignée (40a).

15. Système selon la revendication 13 ou 14, **caractérisé par** une direction de montage (78a) pour un montage de l'accumulateur d'outil électroportatif (10a) sur la machine-outil électroportative (36a), laquelle s'étend au moins sensiblement perpendiculairement à un plan de bobine de l'unité de charge inductive (20a).

16. Système comprenant un dispositif de charge inductive (66a ; 66d) et un accumulateur d'outil électroportatif (10a ; 10d) selon l'une des revendications 1 à 11.

17. Système selon la revendication 16, **caractérisé en ce que** le dispositif de charge inductive (66a ; 66d) possède des éléments à complémentarité de formes (70a ; 70d) servant à une fixation de l'accumulateur d'outil électroportatif (10a ; 10d) pendant une phase de charge.

18. Système selon la revendication 16 ou 17, **caractérisé en ce que** le dispositif de charge inductive (66a ; 66d) et l'accumulateur d'outil électroportatif (10a ; 10dd) possèdent une saillie de positionnement (64a ; 64d) et une cavité de positionnement (68a ; 68d) ayant des formes de base différentes l'une de l'autre.
